# EUROPÄISCHE PATENTSCHRIFT

(11) **EP 2 460 668 B1**
(45) Veröffentlichungstag und Bekanntmachung des Hinweises auf die Patenterteilung: **31.07.2013**
(21) Anmeldenummer: 11190995.8
(22) Anmeldetag: 28.11.2011
(51) Int. Cl.: B42D 15/00, C08F 220/20

(54) **Sicherheits- und/oder Wertdokument mit kratzfest ausgerüsteter Deckschicht**
Safety document and/or valuable document with scratch-proof covering layer
Document de sécurité et/ou de valeur doté d'une couche de revêtement équipée de manière à résister aux égratignures

(30) Priorität: 03.12.2010 EP 10193719
(43) Veröffentlichungstag der Anmeldung: 06.06.2012
(73) Patentinhaber: Bayer Intellectual Property GmbH, 40789 Monheim (DE)
(72) Erfinder: Petzoldt, Joachim, 40789 Monheim (DE); Yesildag, Mehmet-Cengiz, 51377 Leverkusen (DE); Tziovaras, Georgios, 42275 Wuppertal (DE)
(74) Vertreter: BIP Patents

(56) Entgegenhaltungen:
- US-A- 4 340 532
- US-A- 4 617 194

## Beschreibung

Die Erfindung betrifft Sicherheits- und/oder Wertdokumente enthaltend wenigstens eine Kratzfestbeschichtung als Deckschicht auf wenigstens einer Außenseite, ein Verfahren zu deren Herstellung, eine mit einer solchen Kratzfestbeschichtung beschichtete thermoplastische Kunststoff-Folie sowie eine Lackzusammensetzung für eine solche Kratzfestbeschichtung.

Sicherheits- und/oder Wertdokumente, insbesondere Identifikationsdokumente, wie z.B. personalisierte ID-Karten, werden im Allgemeinen hergestellt, indem mehrere unterschiedliche Schichten, die in der Karte verschiedene Funktionen übernehmen, meist in Form von einzelnen Folien zu einer Karte laminiert werden. Hierbei werden oft während des Laminiervorgangs zusätzlich Strukturen mit Abmessungen im µm-Bereich als Sicherheitsmerkmale in die äußere Oberfläche eingeprägt.

Die für solche Dokumente bevorzugt eingesetzten thermoplastischen Materialien haben aber in der Regel relativ weiche, kratzempfindliche Oberflächen. Dadurch leidet während der Lebensdauer eines solchen Dokuments von bis zu zehn Jahren die Lesbarkeit. Darüber hinaus können Sicherheitsmerkmale zerstört werden.

Eine weitere typische Anforderung an personalisierte ID-Karten ist die Biegbarkeit und Bruchfestigkeit. Trotz häufig wiederholter Biegebelastung soll die Karte selbst, aber auch eingebaute Bauteile, wie elektronische Chips oder RFID-Antennen, in ihrer Funktion nicht beeinträchtigt werden.

Speziell Kartenlesegeräte führen oft zu Kratzern auf der Kartenoberfläche, welche die Biegbarkeit und Bruchfestigkeit der Karte reduzieren und damit die Lebensdauer der Karte verkürzen.

Um die Funktionalität der Karten über die Lebensdauer mechanisch wie auch hinsichtlich der Lesbarkeit zu gewährleisten, versuchen viele Hersteller von personalisierten ID-Karten die Außenseiten der Karten mit einer kratzfesten Schutzschicht zu versehen, die zudem eine gute Chemikalienbeständigkeit aufweisen sollte.

Klassische Kratzfestlacke auf Basis von Acrylaten, wie sie für Elektronikgehäuse und Linsen/Displays verwendet werden, haben durch ihre hohe Vernetzungsdichte herausragende Kratzfestigkeiten und Chemikalienbeständigkeiten. Der Nachteil solcher Systeme liegt aber in einer mit der Vernetzungsdichte einher gehenden Versprödung. Diese bewirkt, dass die Karte durch Kerbung (Brechen der Beschichtung) in ihrer Bruchfestigkeit insgesamt beeinträchtigt wird.

Ein weiterer Nachteil ist, dass die Prägbarkeit solcher hochvernetzten Polymere reduziert ist. Das hochvernetzte Polymer lässt sich nicht mehr ausreichend verformen, um relativ feine Strukturen des Masters in ausreichender Abbildungsschärfe zu übernehmen.

Es gibt Ansätze, zur Flexibilisierung solcher hochvernetzten Kratfestbeschichtungen unvernetzte Polymere, wie z.B. Polyvinylacetat (vgl. JP-A 2009-028956) oder Polyethylen-Wachs (vgl. JP-A 2008-006708), in die Beschichtung einzubringen. Dabei werden jedoch die Chemikalienbeständigkeit der Beschichtungen und damit die Lebensdauer der Dokumente verringert.

Auch existieren Möglichkeiten, Kratzfestbeschichtungen, die beispielsweise den hohen Laminiertemperaturen bei der Herstellung der ID-Karten nicht standhalten, nachträglich über Transferfolien und gegebenenfalls zusätzlichem Einsatz von Klebeschichten bei niedrigeren Temperaturen auf den fertigen Kartenrohling aufzulaminieren (vgl. z.B. JP-A 2005-280288, JP-A 2008-006708 und WO-A 2000/050250) oder nachträglich als Lackbeschichtung auf den fertigen Kartenrohling zu applizieren (vgl. z.B. JP-A 2004-315546 und JP-A 2000-119553). Diese Verfahren beinhalten jedoch mindestens einen zusätzlichen, kostenintensiven Verfahrensschritt zum Aufbringen der Kratzfestbeschichtung. Des Weiteren besteht der Nachteil, dass im Falle des Einsatzes von Transferfolien nicht gleichzeitig mit der Lamination der Karte eine Prägung in die Oberfläche erfolgen kann und im Falle der nachträglichen Applizierung einer Lackschicht etwaig eingeprägte Strukturen nicht in der gewünschten Schärfe erhalten bleiben.

Es bestand demnach weiterhin Bedarf nach einer Möglichkeit, Sicherheits- und/oder Wertdokumente, insbesondere Identifikationsdokumente, wie z.B. ID-Karten, mit einer äußeren Kratzfestbeschichtung herzustellen, die den relativ hohen Laminationstemperaturen bei der Herstellung der Dokumente stand hält, eine Prägung mit Strukturen im Mikrometer-Maßstab ermöglicht und den Anforderungen an die Biege- und Bruchfestigkeit solcher Dokumente genügt, ohne dabei signifikant an Kratzfestigkeit oder Chemikalienbeständigkeit einzubüßen.

Die Aufgabe, die der vorliegenden Erfindung zugrunde lag, bestand demnach darin, eine Zusammensetzung für eine solche Kratzfestbeschichtung und damit ein entsprechend ausgerüstetes Sicherheits- und/oder Wertdokument sowie ein Verfahren zur Herstellung eines solchen Sicherheits- und/oder Wertdokumentes aufzufinden.

Diese Aufgabe wurde überraschend durch eine Kratzfestbeschichtung gelöst, die aus einer Lackzusammensetzung mit speziell aufeinander abgestimmten Acrylat- oder Methacrylatbausteinen hergestellt wird.

Gegenstand der vorliegenden Erfindung ist daher ein Sicherheits- und/oder Wertdokument enthaltend wenigstens eine Kratzfestbeschichtung, dadurch gekennzeichnet, dass die Kratzfestbeschichtung hergestellt wurde aus einer Lackzusammensetzung enthaltend
I) 12 bis 70 Gew.-Teile wenigstens eines C₂-C₁₂-Diol-Diacrylats oder C₂-C₁₂-Diol-Dimethacrylats, worin C₂-C₁₂ für einen linearen Alkylenrest steht, der gegebenenfalls mit einer Methylgruppe substituiert sein kann oder durch ein oder mehrere Sauerstoff-Atom(e) unterbrochen und optional mit einer oder mehreren Methylgruppe(n) substituiert sein kann,
II) 12 bis 40 Gew.-Teile wenigstens eines alkoxylierten, bevorzugt ethoxylierten Mono-, Di-, Tri-, Tetra-, Penta- oder Hexaacrylats oder alkoxylierten, bevorzugt ethoxylierten Mono-, Di-, Tri-, Tetra-, Penta- oder Hexamethacrylats,
III) 0 bis 40 Gew.-Teile wenigstens eines Monomeren ausgewählt aus der Gruppe umfassend Pentaerythrit-Triacrylat, Pentaerythrit-Tetraacrylat, Dipentaerythrit-Tetraacrylat, Dipentaerythrit-Pentaacrylat Dipentaerythrit-Hexaacrylat, Pentaerythrit-Trimethacrylat, Pentaerythrit-Tetramethacrylat, Dipentaerythrit-Tetramethacrylat, Dipentaerythrit-Pentamethacrylat, Dipentaerythrit-Hexamethacrylat und deren möglichen Reaktionsprodukten mit aliphatischen oder aromatischen Diisocyanaten,
IV) 5 bis 60 Gew.-Teile wenigstens eines weiteren Mono-, Di- oder Triacrylats oder Mono-, Di- oder Trimethacrylats,
   wobei sich die Gewichtsteile der Komponenten I) bis IV) zu 100 Gew.-Teilen addieren,
   und die Lackzusammensetzung zusätzlich zu diesen 100 Gewichtsteilen wenigstens noch
V) 0,1 bis 10 Gew.-Teile wenigstens eines Photoinitiators
   enthält.

Die Verwendung einer solchen Lackzusammensetzung für die Herstellung von Kratzfestbeschichtungen von Sicherheits- und/oder Wertdokumenten ist bisher nicht beschrieben. Weiterhin Gegenstand der Erfindung ist daher auch die Verwendung einer Lackzusammensetzung enthaltend
I) 12 bis 70 Gew.-Teile wenigstens eines C₂-C₁₂-Diol-Diacrylats oder C₂-C₁₂-Diol-Dimethacrylats, worin C₂-C₁₂ für einen linearen Alkylenrest steht, der gegebenenfalls mit einer Methylgruppe substituiert sein kann oder durch ein oder mehrere Sauerstoff-Atom(e) unterbrochen und optional mit einer oder mehreren Methylgruppe(n) substituiert sein kann,
II) 12 bis 40 Gew.-Teile wenigstens eines alkoxylierten, bevorzugt ethoxylierten Mono-, Di-, Tri-, Tetra-, Penta- oder Hexaacrylats oder alkoxylierten, bevorzugt ethoxylierten Mono-, Di-, Tri-, Tetra-, Penta- oder Hexamethacrylats,
III) 0 bis 40 Gew.-Teile wenigstens eines Monomeren ausgewählt aus der Gruppe umfassend Pentaerythrit-Triacrylat, Pentaerythrit-Tetraacrylat, Dipentaerythrit-Tetraacrylat, Dipentaerythrit-Pentaacrylat Dipentaerythrit-Hexaacrylat, Pentaerythrit-Trimethacrylat, Pentaerythrit-Tetramethacrylat, Dipentaerythrit-Tetramethacrylat, Dipentaerythrit-Pentamethacrylat, Dipentaerythrit-Hexamethacrylat und deren möglichen Reaktionsprodukten mit aliphatischen oder aromatischen Diisocyanaten,
IV) 5 bis 60 Gew.-Teile wenigstens eines weiteren Mono-, Di- oder Triacrylats oder Mono-, Di- oder Trimethacrylats,
   wobei sich die Gewichtsteile der Komponenten I) bis IV) zu 100 Gew.-Teilen addieren,
   und zusätzlich zu diesen 100 Gew.-Teilen wenigstens enthaltend
V) 0,1 bis 10 Gew.-Teile wenigstens eines Photoinitiators,
   zur Herstellung wenigstens einer Kratzfestbeschichtung eines Sicherheits- und/oder Wertdokuments.

Auch eine solche speziell in den Acrylat- bzw- Methacrylatmonomeren derart aufeinander abgestimmte Lackzusammensetzung ist bisher nicht beschrieben. Weiterhin Gegenstand der Erfindung ist daher auch eine Lackzusammensetzung enthaltend
I) 12 bis 70 Gew.-Teile wenigstens eines C₂-C₁₂-Diol-Diacrylats oder C₂-C₁₂-Diol-Dimethacrylats, worin C₂-C₁₂ für einen linearen Alkylenrest steht, der gegebenenfalls mit einer Methylgruppe substituiert sein kann oder durch ein oder mehrere Sauerstoff-Atom(e) unterbrochen und optional mit einer oder mehreren Methylgruppe(n) substituiert sein kann,
II) 12 bis 40 Gew.-Teile wenigstens eines alkoxylierten, bevorzugt ethoxylierten Mono-, Di-, Tri-, Tetra-, Penta- oder Hexaacrylats oder alkoxylierten, bevorzugt ethoxylierten Mono-, Di-, Tri-, Tetra-, Penta- oder Hexamethacrylats,
III) 0 bis 40 Gew.-Teile wenigstens eines Monomeren ausgewählt aus der Gruppe umfassend Pentaerythrit-Triacrylat, Pentaerythrit-Tetraacrylat, Dipentaerythrit-Tetraacrylat, Dipentaerythrit-Pentaacrylat Dipentaerythrit-Hexaacrylat, Pentaerythrit-Trimethacrylat, Pentaerythrit-Tetramethacrylat, Dipentaerythrit-Tetramethacrylat, Dipentaerythrit-Pentamethacrylat, Dipentaerythrit-Hexamethacrylat und deren möglichen Reaktionsprodukten mit aliphatischen oder aromatischen Diisocyanaten,
IV) 5 bis 60 Gew.-Teile wenigstens eines weiteren Mono-, Di- oder Triacrylats oder Mono-, Di- oder Trimethacrylats,
   wobei sich die Gewichtsteile der Komponenten I) bis IV) zu 100 Gew.-Teilen addieren,
   und zusätzlich zu diesen 100 Gew.-Teilen wenigstens enthaltend
V) 0,1 bis 10 Gew.-Teile wenigstens eines Photoinitiators.

Eine aus dieser speziellen erfindungsgemäßen Lackzusammensetzung hergestellte Kratzfestbeschichtung hält den relativ hohen Laminationstemperaturen bei der Herstellung der Dokumente stand und ermöglicht eine Prägung mit Strukturen im Mikrometer-Maßstab, ohne dabei Risse zu zeigen. Zudem genügt diese Beschichtung den Anforderungen an die Biege- und Bruchfestigkeit solcher Dokumente. Des Weiteren zeigt die Beschichtung gute Kratzfestigkeit und Chemikalienbeständigkeit. Es besteht zudem die Möglichkeit, durch die aus dieser speziellen erfindungsgemäßen Lackzusammensetzung hergestellte Kratzfestbeschichtung ohne Beeinträchtigung Informationen, vorzugsweise auch personalisierte Informationen, mittels Laser in die Dokumente einzuschreiben.

Eine solche Kratzfestbeschichtung ermöglicht daher die Herstellung der erfindungsgemäßen Sicherheits- und/oder Wertdokumente, indem für die Herstellung der äußeren Kratzfestbeschichtung eine mit einer entsprechenden Beschichtung kratzfest ausgerüstet thermoplastische Kunststoff-Folie direkt bei der Lamination des Kartenrohlings eingesetzt werden kann.

Weiterhin Gegenstand der vorliegenden Erfindung ist demnach ein Verfahren zur Herstellung eines Sicherheits- und/oder Wertdokuments bei dem ein Folienstapel enthaltend mehrere thermoplastische Kunststoff-Folien gebildet und anschließend laminiert wird, dadurch gekennzeichnet, dass der Folienstapel für die Herstellung wenigstens einer kratzfest ausgerüsteten Außenschicht des Sicherheits- und/oder Wertdokuments wenigstens eine thermoplastische Kunststoff-Folie mit einer nach außen gerichteten, kratzfest beschichteten Seite enthält, wobei die Kratzfestbeschichtung dieser thermoplastischen Kunststoff-Folie hergestellt wurde aus einer Lackzusammensetzung enthaltend
I) 12 bis 70 Gew.-Teile wenigstens eines C₂-C₁₂-Diol-Diacrylats oder C₂-C₁₂-Diol-Dimethacrylats, worin C₂-C₁₂ für einen linearen Alkylenrest steht, der gegebenenfalls mit einer Methylgruppe substituiert sein kann oder durch ein oder mehrere Sauerstoff-Atom(e) unterbrochen und optional mit einer oder mehreren Methylgruppe(n) substituiert sein kann,
II) 12 bis 40 Gew.-Teile wenigstens eines alkoxylierten, bevorzugt ethoxylierten Mono-, Di-, Tri-, Tetra-, Penta- oder Hexaacrylats oder alkoxylierten, bevorzugt ethoxylierten Mono-, Di-, Tri-, Tetra-, Penta- oder Hexamethacrylats,
III) 0 bis 40 Gew.-Teile wenigstens eines Monomeren ausgewählt aus der Gruppe umfassend Pentaerythrit-Triacrylat, Pentaerythrit-Tetraacrylat, Dipentaerythrit-Tetraacrylat, Dipentaerythrit-Pentaacrylat Dipentaerythrit-Hexaacrylat, Pentaerythrit-Trimethacrylat, Pentaerythrit-Tetramethacrylat, Dipentaerythrit-Tetramethacrylat, Dipentaerythrit-Pentamethacrylat, Dipentaerythrit-Hexamethacrylat und deren möglichen Reaktionsprodukten mit aliphatischen oder aromatischen Diisocyanaten,
IV) 5 bis 60 Gew.-Teile wenigstens eines weiteren Mono-, Di- oder Triacrylats oder Mono-, Di- oder Trimethacrylats,
   wobei sich die Gewichtsteile der Komponenten I) bis IV) zu 100 Gew.-Teilen addieren,
   und zusätzlich zu diesen 100 Gew.-Teilen wenigstens enthaltend
V) 0,1 bis 10 Gew.-Teile wenigstens eines Photoinitiators.

Im erfindungsgemäßen Verfahren können dadurch zusätzliche Verfahrensschritte, wie z.B. das nachträgliche Aufbringen einer Lackbeschichtung sowie deren Aushärten oder das nachträgliche Auflaminieren einer Kratzfestbeschichtung mit Hilfe einer nachher zu entfernenden Transferfolie, entfallen.

Die für das erfindungsgemäße Verfahren kratzfest beschichtete thermoplastische Kunststoff-Folie ist bisher ebenfalls noch nicht beschrieben.

Gegenstand der vorliegenden Erfindung ist daher weiterhin eine thermoplastische Kunststoff-Folie, dadurch gekennzeichnet, dass sie wenigstens eine Beschichtung hergestellt aus einer Lackzusammensetzung enthaltend
I) 12 bis 70 Gew.-Teile wenigstens eines C₂-C₁₂-Diol-Diacrylats oder C₂-C₁₂-Diol-Dimethacrylats, worin C₂-C₁₂ für einen linearen Alkylenrest steht, der gegebenenfalls mit einer Methylgruppe substituiert sein kann oder durch ein oder mehrere Sauerstoff-Atom(e) unterbrochen und optional mit einer oder mehreren Methylgruppe(n) substituiert sein kann,
II) 12 bis 40 Gew.-Teile wenigstens eines alkoxylierten, bevorzugt ethoxylierten Mono-, Di-, Tri-, Tetra-, Penta- oder Hexaacrylats oder alkoxylierten, bevorzugt ethoxylierten Mono-, Di-, Tri-, Tetra-, Penta- oder Hexamethacrylats,
III) 0 bis 40 Gew.-Teile wenigstens eines Monomeren ausgewählt aus der Gruppe umfassend Pentaerythrit-Triacrylat, Pentaerythrit-Tetraacrylat, Dipentaerythrit-Tetraacrylat, Dipentaerythrit-Pentaacrylat Dipentaerythrit-Hexaacrylat, Pentaerythrit-Trimethacrylat, Pentaerythrit-Tetramethacrylat, Dipentaerythrit-Tetramethacrylat, Dipentaerythrit-Pentamethacrylat, Dipentaerythrit-Hexamethacrylat und deren möglichen Reaktionsprodukten mit aliphatischen oder aromatischen Diisocyanaten,
IV) 5 bis 60 Gew.-Teile wenigstens eines weiteren Mono-, Di- oder Triacrylats oder Mono-, Di- oder Trimethacrylats,
   wobei sich die Gewichtsteile der Komponenten I) bis IV) zu 100 Gew.-Teilen addieren,
   und zusätzlich zu diesen 100 Gew.-Teilen wenigstens enthaltend
V) 0,1 bis 10 Gew.-Teile wenigstens eines Photoinitiators,
   aufweist.

Die erfindungsgemäße oder zur Herstellung der Kratzfestbeschichtung erfindungsgemäß eingesetzte Lackzusammensetzung - nachfolgend als Lackzusammensetzung bezeichnet - enthält bevorzugt 15 bis 60 Gew.-Teile, besonders bevorzugt 20 bis 55 Gew.-Teile der Komponente I). Bei den genannten Gewichtsteilen handelt es sich um die Summe der Gewichtsteile aller Diacrylate oder Dimethacrylate, aus denen sich die Komponente I) zusammensetzt.

Bei der Komponente I) handelt es sich bevorzugt um wenigstens ein C₄-C₁₂-Diol-Diacrylat oder C₄-C₁₂-Diol-Dimethacrylat, besonders bevorzugt um wenigstens ein C₄-C₈-Diol-Diacrylat oder C₄-C₈-Diol-Dimethacrylat. Bei den C₂-C₁₂-, bevorzugt C₄-C₁₂-, besonders bevorzugt C₄-C₈-Einheiten handelt es sich bevorzugt um lineare Alkylenreste, welche gegebenenfalls mit einer Methylgruppe substituiert sein können oder durch ein oder mehrere Sauerstoff-Atom(e) unterbrochen und optional mit einer oder mehreren Methylgruppe(n) substituiert sein können. Bevorzugt handelt es sich um lineare Alkenreste, welche gegebenenfalls durch ein oder mehrere Sauerstoff-Atom(e) unterbrochen sein können.

Als geeignete Diol-Diacrylate oder Diol-Dimethacrylate kommen ganz besonders bevorzugt solche der allgemeinen Formel (I) in Frage,

H₂C=C(R¹)-C(O)-O-(CH₂)ₙ-O-C(O)-C(R¹)=CH₂ (I)

worin
R¹ für H oder CH₃, bevorzugt für H steht, und
n für eine ganze Zahl von 2 bis 12, bevorzugt von 4 bis 12, besonders bevorzugt von 4 bis 8 steht.

Als geeignete Diol-Diacrylate oder Diol-Dimethacrylate kommen weiterhin ganz besonders bevorzugt solche der allgemeinen Formel (II) in Frage,

H₂C=C(R²)-C(O)-O-(CHR³-CH₂-O)ₘ-C(O)-C(R²)=CH₂ (II)

worin
R² für H oder CH₃, bevorzugt für H steht,
R³ für H oder CH₃, steht, und
m für eine ganze Zahl von 2 bis 5, bevorzugt von 2 bis 4 steht.
Geeignete C₄-C₈-Diol-Diacrylate oder -Diol-Dimethacrylate sind beispielsweise Diethylenglycoldiacrylat, Diethylenglycoldimethacrylat, Triethylenglycoldiacrylat, Triethylenglycoldimethacrylat, Tetraethylenglykoldiacrylat, Tetraethylenglykoldimethacrylat, Dipropylenglykoldiacrylat, Dipropylenglykoldimethacrylat, Tripropylenglykoldiacrylat, Tripropylenglykoldimethacrylat, 1,4-Butandioldiacrylat, 1,4-Butandioldimethacrylat, 1,5-Pentandioldiacrylat, 1,5-Pentandioldimethacrylat, 1,6-Hexandioldiacrylat, 1,6-Hexandioldimethacrylat, 3-Methyl-1,5-Pentandioldiacrylat, 3-Methyl-1,5-Pentandioldimethacrylat, 1,7-Heptandioldiacrylat, 1,7-Heptandioldimethacrylat, 1,8-Octandioldiacrylat und/oder 1,8-Octandioldimethacrylat. Darüber hinaus geeignete C₄-C₁₂-Diol-Diacrylate oder -Diol-Dimethacrylate sind beispielsweise 1,9-Nonandioldiacrylat, 1,9-Nonandioldimethacrylat, 2-Methyl-1,8-Octandioldiacrylat, 2-Methyl-1,8-Octandioldimethacrylat, 1,10-Decandioldiacrylat, 1,10-Decandioldimethacrylat, 1,11-Undecandioldiacrylat, 1,11-Undecandioldimethacrylat, 1,12-Dodecandioldiacrylat und/oder 1,12-Dodecandioldimethacrylat. Darüber hinaus geeignete C₂-C₁₂-Diol-Diacrylate oder -Diol-Dimethacrylate sind beispielsweise Ethylenglycoldiacrylat, Ethylenglycoldimethacrylat, 1,3-Propandioldiacrylat und/oder 1,3-Propandioldimethacrylat. Ganz besonders bevorzugt sind die jeweiligen Diacrylate. Besonders bevorzugt sind 1,6-Hexandioldiacrylat und/oder 1,6-Hexandioldimethacrylat Diethylenglycoldiacrylat, Diethylenglycoldimethacrylat, insbesondere bevorzugt 1,6-Hexandioldiacrylat Diethylenglycoldiacrylat.

Die Lackzusammensetzung enthält bevorzugt 12 bis 35 Gew.-Teile, besonders bevorzugt 15 bis 30 Gew.-Teile, ganz besonders bevorzugt 20 bis 30 Gew.-Teile der Komponente II). Bei den genannten Gewichtsteilen handelt es sich um die Summe der Gewichtsteile aller alkoxylierten Mono-, Di-, oder Triacrylate oder -methacrylate, aus denen sich die Komponente II) zusammensetzt.

Bei den alkoxylierten Monoacrylaten oder -methacrylaten für die Komponente (II) kann es sich um alkoxylierte gegebenenfalls substituierte aliphatische, cycloaliphatische, aromatische, gemischt aromatisch-aliphatische Monoacrylate oder -methacrylate handeln. Dabei kommen sowohl alkoxylierte lineare als auch verzeigte aliphatische Monoacrylate oder -methacrylate in Frage, in denen die Alkylkette zudem durch ein oder mehrere Heteroatome, wie z.B. Sauerstoffatome unterbrochen sein kann. Im Falle der cycloaliphatischen oder aromatischen Monoacrylate oder - methacrylate kommen auch heterocylische oder heteroaromatische Monoacrylate oder - methacrylate in Frage.

Beispiele für solche alkoxylierten Monoacrylate oder -methacrylate sind alkoxyliertes, bevorzugt ethoxyliertes Methylacrylat, Ethylacrylat, n-Butylacrylat, Isobutylacrylate, t-Butylacrylat, 2-Ethyl-hexylacrylat, Isodecylacrylat, n-Laurylacrylat, C₁₂-C₁₅-Alkylacrylate, n-Stearylacrylat, n-Butoxyethylacrylat, Butoxydiethylenglycolacrylat, Methoxytriethylenglycolacrylat, Cyclohexylacrylat, Tetrahydrofurfurylacrylat, Benzylacrylat, 2-Phenoxyethylacrylat, Isobornylacrylat, 2-Hydroxyethylacrylat, 2-Hydroxypropylacrylat, 2-Hydroxyethylacrylat, 2-Hydroxybutylacrylat, 2-Hydroxybutylacrylat und die entsprechenden alkoxylierten, bevorzugt ethoxylierten Methacrylate.

Bei den alkoxylierten Diacrylaten oder -methacrylaten für die Komponente (II) kann es sich beispielsweise um solche handeln, die von den Diol-Diacrylaten und -methacrylaten der Komponente I) verschieden sind.

Beispiele für solche alkoxylierten Diacrylate oder -methacrylate sind alkoxyliertes, bevorzugt ethoxyliertes Methandioldiacrylat, Methandioldimethacrylat, Glycerindiacrylat, Glycerindimethacrylat, Neopentylglycoldiacrylat, Neopentylglycoldimethacrylat, 2-Butyl-2-Ethyl-1,3-Propandioldiacrylat, 2-Butyl-2-Ethyl-1,3-Propandioldimethacrylat, Trimethylolpropandiacrylat oder Trimethylolpropandimethacrylat.

Beispiele für alkoxylierte Triacrylate oder -methacrylate für die Komponente (II) sind alkoxyliertes, bevorzugt ethoxyliertes Pentaerythrit-Triacrylat, Pentaerythrit-Trimethacrylat, Glycerintriacrylat, Glycerintrimethacrylat, 1,2,4-Butantrioltriacrylat, 1,2,4-Butantrioltrimethacrylat, Trimethylolpropantriacrylat, Trimethylolpropantrimethacrylat, Tricyclodecandimethanoldiacrylat, Tricyclodecandimethanoldimethacrylat, Ditrimethylolpropantetraacrylat oder Ditrimethylolpropantetramethacrylat.

Beispiele für alkoxylierte Tetra-, Penta- oder Hexaacrylate sind alkoxyliertes, bevorzugt ethoxyliertes Pentaerythrit-Tetraacrylat, Dipentaerythrit-Tetraacrylat, Dipentaerythrit-Pentaacrylat Dipentaerythrit-Hexaacrylat, Pentaerythrit-Tetramethacrylat, Dipentaerythrit-Tetramethacrylat, Dipentaerythrit-Pentamethacrylat oder Dipentaerythrit-Hexamethacrylat.

In den alkoxylierten Diacrylaten oder -methacrylaten, Triacrylaten oder -methacrylaten, Tetraacrylaten oder -methacrylaten, Pentaacrylaten oder -methacrylaten und/oder alkoxylierten Hexaacrylaten oder -methacrylaten der Komponente II) können alle Acrylatgruppen oder Methacrylatgruppen oder nur ein Teil der Acrylatgruppen oder Methacrylatgruppen im jeweiligen Monomer über Alkylenoxidgruppen an den entsprechenden Rest gebunden sein. Es können auch beliebige Mischungen solcher ganz oder teilweise alkoxylierten Di-, Tri-, Tetra-, Penta- oder Hexaacrylate bzw. -methacrylate eingesetzt werden. Dabei ist es auch möglich, das die Acrylat-oder Methacrylatgruppe(n) über mehrere aufeinanderfolgende Alkylenoxidgruppen, vorzugsweise Ethylenoxidgruppen an den aliphatischen, cycloaliphatischen oder aromatischen Rest des Monomeren gebunden sind. Die mittlere Anzahl der Alkylenoxid- bzw Ethylenoxidgruppen im Monomer wird durch den Alkoxylierungsgrad bzw. Ethoxylierungsgrad angegeben. Der Alkoxylierungsgrad bzw. Ethoxylierungsgrad kann bevorzugt von 2 bis 25 betragen, besonders bevorzugt sind Alkoxylierungsgrade bzw. Ethoxylierungsgrade von 2 bis 15, ganz besonders bevorzugt von 3 bis 9.

Komponente (II) enthält bevorzugt alkoxylierte, vorzugsweise ethoxylierte Di- und/oder Triacrylate. Komponente (II) enthält besonders bevorzugt wenigstens ein alkoxyliertes, vorzugsweise ethoxyliertes Di- oder Triacrylat oder wenigstens ein alkoxyliertes, vorzugsweise ethoxyliertes Di- oder Trimethacrylat, ganz besonders bevorzugt ein ethoxyliertes Di- oder Triacrylat. Komponente (II) enthält in bevorzugten Ausführungsformen der Erfindung wenigstens ein ethoxyliertes Triacrylat oder -methacrylat, vorzugsweise ethoxyliertes Triacrylat. Besonders bevorzugt enthält Komponente (II) alkoxyliertes Trimethylolpropantriacrylat und/oder Trimethylolpropantrimethacrylat. In bevorzugten Ausführungsformen enthält Komponente (II) ethoxyliertes Trimethylolpropantriacrylat und/oder Trimethylolpropantrimethacrylat, vorzugsweise ethoxyliertes Trimethylolpropantriacrylat. In bevorzugten Ausführungsformen beträgt der Ethoxylierungsgrad der Trimethylolpropantriacrylate und/oder Trimethylolpropantrimethacrylate 2 bis 25, besonders bevorzugt 2 bis 15, ganz besonders bevorzugt 3 bis 9.

Die Lackzusammensetzung enthält bevorzugt 0 bis 30 Gew.-Teile, besonders bevorzugt 0,1 bis 30 Gew.-Teile der Komponente III). In besonders bevorzugten Ausführungsformen ist die Komponente III) in der Lackzusammensetzung enthalten. Bei den genannten Gewichtsteilen handelt es sich um die Summe der Gewichtsteile aller Monomere aus der genannten Gruppe, aus denen sich die Komponente III) zusammensetzt.

Bei der Komponente III) handelt es sich um Monomere ausgewählt aus der Gruppe umfassend Pentaerythrit-Triacrylat, Pentaerythrit-Tetraacrylat, Dipentaerythrit-Tetraacrylat, Dipentaerythrit-Pentaacrylat, Pentaerythrit-Trimethacrylat, Pentaerythrit-Tetramethacrylat, Dipentaerythrit-Tetramethacrylat, Dipentaerythrit-Pentamethacrylat und deren Reaktionsprodukte mit aliphatischen oder aromatischen Diisocyanaten sowie umfassend Dipentaerythrit-Hexaacrylat und Dipentaerythrit-Hexamethacrylat. Bevorzugt handelt es sich bei der Komponente III) um Mischungen enthaltend zwei oder mehrere der vorangehend genannten Monomere.

Als aliphatische Diisocyanate eignen sich lineare aliphatische, verzweigte aliphatische und/oder cycloaliphatische Diisocyanate. Beispiele für solche aliphatischen Diisocyanate sind 1,4-Butylendiisocyanat, 1,6- Hexamethylendiisocyanat (HDI), Isophorondiisocyanat (IPDI), 2,2,4 und/oder 2,4,4-Trimethylhexamethylendiisocyanat, die isomeren Bis-(4,4`- isocyanatocyclohexyl)methane oder deren Mischungen beliebigen Isomerengehalts, 1,4-Cyclohexylendiisocyanat, 4-Isocyanatomethyl-1,8-octandiisocyanat (Nonantriisocyanat), Alkyl-2,6-diisocyanatohexanoate (Lysindiisocyanate) mit Alkylgruppen mit 1 bis 8 Kohlenstoffatomen sowie Mischungen aus diesen.

Beispiele für aromatische Diisocyanate sind 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(isocyanatomethyl)benzol (XDI) sowie Mischungen aus diesen.

Bevorzugte aliphatische oder aromatische Diisocyanate sind 1,6-Hexamethylendiisocyanat (HDI), Isophorondiisocyanat (IPDI) oder 2,4- und/oder 2,6-Toluylendiisocyanat (TDI).

In ganz bevorzugten Ausführungsformen enthält die Komponente III) Pentaerythrit-Triacrylat, Pentaerythrit-Tetraacrylat, Dipentaerythrit-Tetraacrylat, Dipentaerythrit-Pentaacrylat und/oder Dipentaerythrit-Hexaacrylat.

Die Lackzusammensetzung enthält bevorzugt 10 bis 60 Gew.-Teile, besonders bevorzugt 15 bis 55 Gew.-Teile der Komponente IV). Bei den genannten Gewichtsteilen handelt es sich um die Summe der Gewichtsteile aller Mono-, Di-, oder Triacrylate oder -methacrylate, aus denen sich die Komponente IV) zusammensetzt.

Bei den Monoacrylaten oder -methacrylaten für die Komponente (IV) kann es sich um gegebenenfalls substituierte aliphatische, cycloaliphatische, aromatische, gemischt aromatisch-aliphatische Monoacrylate oder -methacrylate handeln. Dabei kommen sowohl lineare als auch verzeigte aliphatische Monoacrylate oder -methacrylate in Frage, in denen die Alkylkette zudem durch ein oder mehrere Heteroatome, wie z.B. Sauerstoffatome unterbrochen sein kann. Im Falle der cycloaliphatischen oder aromatischen Monoacrylate oder -methacrylate kommen auch heterocylische oder heteroaromatische Monoacrylate oder -methacrylate in Frage. Die in Frage kommenden Monoacrylate oder -methacrylate für die Komponente (IV) sind nicht alkoxyliert. Beispiele für solche Monoacrylate oder -methacrylate sind Methylacrylat, Ethylacrylat, n-Butylacrylat, Isobutylacrylate, t-Butylacrylat, 2-Ethyl-hexylacrylat, Isodecylacrylat, n-Laurylacrylat, C₁₂-C₁₅-Alkylacrylate, n-Stearylacrylat, n-Butoxyethylacrylat, Butoxydiethylenglycolacrylat, Methoxytriethylenglycolacrylat, Cyclohexylacrylat, Tetrahydrofurfurylacrylat, Benzylacrylat, 2-Phenoxyethylacrylat, Isobornylacrylat, 2-Hydroxyethylacrylat, 2-Hydroxypropylacrylat, 2-Hydroxyethylacrylat, 2-Hydroxybutylacrylat, und die entsprechenden Methacrylate.

Bei den Diacrylaten oder -methacrylaten für die Komponente (IV) kann es sich beispielsweise um solche handeln, die von den Diol-Diacrylaten und -methacrylaten der Komponente I) verschieden und nicht alkoxyliert sind.

Beispiele für solche Diacrylate oder -methacrylate sind Methandioldiacrylat, Methandioldimethacrylat, Glycerindiacrylat, Glycerindimethacrylat, Neopentylglycoldiacrylat, Neopentylglycoldimethacrylat, 2-Butyl-2-Ethyl-1,3-Propandioldiacrylate, 2-Butyl-2-Ethyl-1,3-Propandioldimethacrylat, Trimethylolpropandiacrylat oder Trimethylolpropandimethacrylat.

Bei den Triacrylaten oder -methacrylaten für die Komponente (IV) kann es sich beispielsweise um solche handeln, die von den Triacrylaten und -methacrylaten der Komponente III) verschieden und nicht alkoxyliert sind.

Beispiele für solche Triacrylate oder -methacrylate sind Glycerintriacrylat, Glycerintrimethacrylat, 1,2,4-Butantrioltriacrylat, 1,2,4-Butantrioltrimethacrylat, Trimethylolpropantriacrylat, Trimethylolpropantrimethacrylat, Tricyclodecandimethanoldiacrylat, Tricyclodecandimethanoldimethacrylat, Ditrimethylolpropantetraacrylat oder Ditrimethylolpropantetramethacrylat.

Komponente (IV) enthält bevorzugt wenigstens ein Di- oder Triacrylat oder wenigstens ein Di- oder Trimethacrylat. Komponente (IV) enthält besonders bevorzugt wenigstens ein Triacrylat oder -methacrylat. Besonders bevorzugt enthält Komponente (IV) Trimethylolpropantriacrylat und/oder Trimethylolpropantrimethacrylat, vorzugsweise Trimethylolpropantriacrylat.

Geeignete Photoinitiatoren (UV-getriebene Initiatoren) besitzen vorzugsweise eine hohe photochemische Reaktivität und eine Absorptionsbande im nahen UV-Bereich (>300 nm und besonders bevorzugt >350 nm).

Geeignete Photoinitiatoren sind vorzugsweise solche ausgewählt aus der Gruppe aus Acylphosphinoxid-Derivaten, α-Aminoalkylphenon-Derivaten, Hydroxyalkylphenonen Benzophenonen, Benzilketalen, Methylbenzoylformat und Phenylacetophenonen.

Beispiele für solche Photoinitiatoren sind Benzophenon, Bis(2,4,6-trimethylbenzoyl)phenylphosphinoxid (Irgacure® 819 von Ciba Specialty Chemicals), 1-Hydroxy-cyclohexyl-phenyl-keton (Irgacure® 184 von Ciba Specialty Chemicals), 2-Benzyl-2-(dimethylamino)-1-(4-morpholinophenyl)-1-butanon (Irgacure® 369 von Ciba Specialty Chemicals), 2-Methyl-1-[4-(methylthio)phenyl]-2-morpholino-1-propanon (Irgacure® 907 von Ciba Specialty Chemicals), (1-Hydroxycyclohexyl)phenylmethanon (Irgacure® 1800 von Ciba Specialty Chemicals), 2-Hydroxy-2-methyl-1-phenyl-1-propanon (Irgacure® 1700 von Ciba Specialty Chemicals), Bis(2,6-dimethylbenzoyl)(2,4,4-trimethylpentyl)phosphinoxid, Bis(2,6-dimethoxybenzoyl)(2,4,4-trimethylpentyl)phosphinoxid, (2,4,6-Trimethylbenzoyl)diphenylphosphinoxid (Lucirin® TPO Solid von der BASF AG), 2,4,6-Trimethylbenzoylethoxyphenylphosphinoxid (Lucirin® TPO-L von der BASF AG), Benzoylphosphonsäurebis(2,6-dimethylphenyl)ester (Lucirin® 8728 von der BASF AG), und 2-Hydroxy-2-methyl-1-phenyl-1-propanon (Darocur® 4265 von Ciba Specialty Chemicals).

Ebenfalls geeignet sind Mischungen dieser Photoinitiatoren untereinander.

Die Lackzusammensetzung kann zudem über die 100 Gew.-Teile der Komponenten I) bis IV) hinaus optional ein oder mehrere weitere Lackadditive enthalten. Solche Lackadditive können beispielsweise ausgewählt sein aus der Gruppe enthaltend Stabilisatoren, Verlaufsmittel, Oberflächenadditive, Pigmente, Farbstoffe, anorganische Nanopartikel, Haftvermittler, IR-Absorber und UV-Absorber, bevorzugt aus der Gruppe enthaltend Stabilisatoren, Verlaufsmittel, Oberflächenadditive und anorganische Nanopartikel. Die Lackzusammensetzung enthält bevorzugt zusätzlich zu der Menge des Photoinitiators und zusätzlich zu den 100 Gew.-Teilen der Komponenten I) bis IV) als Komponente VI) 0 bis 20 Gew.-Teile, besonders bevorzugt 0 bis 10 Gew.-Teile, ganz besonders bevorzugt 0,1 bis 10 Gew.-Teile wenigstens eines weiteren Lackadditivs. Bevorzugt beträgt der Gesamtanteil aller in der Lackzusammensetzung enthaltenen Lackadditive 0 bis 20 Gew.-Teile, besonders bevorzugt 0 bis 10 Gew.-Teile, ganz besonders bevorzugt 0,1 bis 10 Gew.-Teile.

Die Lackzusammensetzung kann anorganische Nanopartikel zur Erhöhung der mechanischen Beständigkeit, wie z.B. Kratzfestigkeit und/oder Bleistifthärte, sowie zum Schutz vor UV-Strahlung enthalten.

Als Nanopartikel kommen anorganische Oxide, Mischoxide, Hydroxide, Sulfate, Carbonate, Carbide, Boride und Nitride von Elementen der II bis IV Hauptgruppe und/oder Elementen der I bis VIII Nebengruppe des Periodensystems einschließlich der Lanthanide in Frage. Bevorzugte Nanopartikel sind Siliziumoxid-, Aluminiumoxid-, Ceroxid-, Zirkonoxid-, Nioboxid-, Zinkoxid- oder Titanoxid-Nanopartikel, besonders bevorzugt sind Siliziumoxid-Nanopartikel.

Die eingesetzten Partikel weisen vorzugsweise mittlere Partikelgrößen (gemessen mittels dynamischer Lichtstreuung in Dispersion bestimmt als Z-Mittelwert) kleiner 200 nm, bevorzugt von 5 bis 100 nm, besonders bevorzugt 5 bis 50 nm auf. Bevorzugt weisen wenigstens 75%, besonders bevorzugt wenigstens 90 %, ganz besonders bevorzugt wenigstens 95% aller eingesetzten Nanopartikel die vorstehend definierten Größen auf.

Die Lackzusammensetzung kann zudem über die 100 Gew.-Teile der Komponenten I) bis IV) hinaus optional ein oder mehrere organische Lösungsmittel enthalten. Solche organischen Lösungsmittel können beispielsweise ausgewählt sein aus der Gruppe enthaltend aromatische Lösemittel, wie z.B. Xylol oder Toluol, Ketone, wie z.B. Aceton, 2-Butanon, Methyl-isobutylketon, Diacetonalkohol, Alkohole, wie z.B. Methanol, Ethanol, i-Propanol, 2-Methoxy-propylalkohol, Ether, wie z.B. 1,4-Dioxan, Ethylenglykol-n-propylether, oder Ester, wie z.B. Essigsäureethylester, Essigsäurebutylester, 1-Methoxy-2-propylacetat oder Mischungen enthaltend diese Lösungsmittel. Besonders bevorzugt sind i-Propanol, Essigsäureethylester, Essigsäurebutylester, 2-Methoxy-propylalkohol, Xylol oder Toluol. Die Lackzusammensetzung enthält bevorzugt zusätzlich zu der Menge des Photoinitiators und zusätzlich zu den 100 Gew.-Teilen der Komponenten I) bis IV) als Komponente VII) 0 bis 300 Gew.-Teile, besonders bevorzugt 0 bis 200 Gew.-Teile, ganz besonders bevorzugt 10 bis 150 Gew.-Teile wenigstens eines organischen Lösungsmittels. Bevorzugt beträgt der Gesamtanteil aller in der Lackzusammensetzung enthaltenen organischen Lösungsmittel 0 bis 300 Gew.-Teile, besonders bevorzugt 0 bis 200 Gew.-Teile, ganz besonders bevorzugt 10 bis 150 Gew.-Teile.

Die Lackzusammensetzung kann zudem über die 100 Gew.-Teile der Komponenten I) bis IV) hinaus optional ein oder mehrere lasersensible Additive enthalten. Als geeignete lasersensible Additive kommen die weiter hinten in dieser Anmeldung für die Kunststoffschichten genannten in Frage. Die lasersensiblen Additive können der Lackzusammensetzung bevorzugt in einer solchen Menge zugegeben werden, dass die ganz oder teilweise gehärtete Kratzfestbeschichtung 10 bis 250 ppm, besonders bevorzugt 15 bis 150 ppm lasersensibles Additiv, bezogen auf das Gesamtgewicht der ganz oder teilweise gehärteten Beschichtung (ohne etwaige Lösungsmittel) aufweist.

Die Lackzusammensetzungen können auf einfache Weise hergestellt werden, indem die einzelnen Komponenten I) bis V) und gegebenenfalls die optionalen Komponenten VI) und VII) entweder in Abwesenheit von Lösungsmittel(n) zusammen gegeben und durch Rühren miteinander vermischt werden oder in Anwesenheit von Lösungsmittel(n) beispielsweise in das oder die Lösungsmittel gegeben und durch Rühren miteinander vermischt werden. Bevorzugt wird zuerst der Photoinitiator in dem oder den Lösungsmitteln oder beispielsweise in der Komponente I) gelöst und anschließend die weiteren Komponenten hinzugegeben. Gegebenenfalls erfolgt anschließend noch eine Reinigung mittels Filtration, vorzugsweise mittels Feinfiltration.

Aus den Lackzusammensetzungen können auf einfache Weise Kratzfestbeschichtungen hergestellt werden, indem die Lackzusammensetzungen nach gängigen Verfahren auf entsprechende Substrate appliziert und danach unter geeigneten Bedingungen ausgehärtet werden. Dabei können beispielsweise eine oder mehrere Schichten aus der Lackzusammensetzung auf das entsprechende gegebenenfalls vorbehandelte Substrat aufgebracht werden, anschließend wenigstens ein Teil des gegebenenfalls vorhandenen Lösungsmittels aus der oder den Schicht(en) entfernt werden und anschließend die so erhaltene(n) Schicht(en) ausgehärtet werden. Dabei kann im Falle des Aufbringens mehrerer Schichten aus der Lackzusammensetzung das Entfernen wenigstens ein Teil des gegebenenfalls vorhandenen Lösungsmittels jeweils vor dem Aufbringen der nächsten Schicht erfolgen. Auch das Aushärten der jeweiligen Schicht(en) kann gegebenenfalls jeweils vor dem Aufbringen der nächsten Schicht erfolgen.

Die Applikation (Aufbringung) kann beispielsweise durch Tauchen, Fluten, Sprühen, Rakeln, Gießen, Spin-Coating oder Streichen erfolgen. Großtechnisch kann die Applikation beispielsweise in einem Rolle-zu-Rolle-Verfahren durch Sprühen, Rakeln, Gießen oder Walzen erfolgen. Anschließend wird gegebenenfalls vorhandenes Lösungsmittel ganz oder teilweise entfernt, bevorzugt verdampft, und die so erhaltene Beschichtung vorzugsweise mittels UV-Strahlung ausgehärtet. Angaben zur Applikation nach gängigen Methoden finden sich beispielsweise in Organic Coatings: Science and Technology, John Wiley & Sons 1994, Kapitel 22, Seiten 65-82.

Für die Herstellung der erfindungsgemäßen thermoplastischen Kunststoff-Folie mit einer solchen Kratzfestbeschichtung dient eine thermoplastische Kunststoff-Folie als Substrat. Als thermoplastische Kunststoff-Folien kommen erfindungsgemäß solche Folien enthaltend wenigstens eine Schicht enthaltend wenigstens einen thermoplastischen Kunststoff in Frage. Es ist jedoch auch möglich, die Kratzfestbeschichtung auf andere Substrate, wie z.B. einen fertigen Kartenrohling oder einen vorgefertigten Mehrschichtaufbau aufzubringen. Es ist jedoch bevorzugt, die Kratzfestbeschichtung auf eine thermoplastische Kunststoff-Folie aufzubringen, da diese in das erfindungsgemäße Verfahren eingesetzt werden kann. Bei einer solchen thermoplastischen Kunststoff-Folie kann es sich um eine ein- oder mehrschichtige thermoplastische Kunststoff-Folie handeln. Im Falle einer mehrschichtigen thermoplastischen Kunststoff-Folie als Substrat kann diese eine mittels Co-Extrusion, Extrusionslamination oder Lamination, vorzugsweise eine mittels Co-Extrusion hergestellte thermoplastische Kunststoff-Folie sein.

Die erfindungsgemäße thermoplastische Kunststoff-Folie weist bevorzugt eine Dicke von 20 µm bis 500 µm, besonders bevorzugt von 25 bis 300 µm, ganz besonders bevorzugt von 30 bis 250 µm aufweisen. In bevorzugten Ausführungsformen weist die erfindungsgemäße thermoplastische Kunststoff-Folie eine Dicke von 50 bis 150 µm auf.

Die erfindungsgemäße thermoplastische Kunststoff-Folie weist auf der nicht mit der Kratzfestbeschichtung beschichteten Seite bevorzugt eine Grundrauhtiefe R_{3z} von 1 bis 20 µm, bevorzugt 3 bis 20 µm auf. Bei der Grundrauhtiefe R_{3z} handelt es sich um den arithmetischen Mittelwert von 5 Einzelrauhtiefen R_{3z}, bis R_{3z5}, wobei die Einzelrauhtiefe definiert ist als der senkrechte Abstand zwischen der dritthöchsten Profilspitze und dem dritttiefsten Profiltal innerhalb der Einzelmessstrecke L_{c}. Die Grundrauhtiefe R_{3z} wird gemessen über eine Messlänge von Lₘ = 12,5 mm und einer Einzelmessstrecke L_{c} von 2,5 mm. Die Messungen können nach der Daimler Benz-Werknorm N31007 von 1983 erfolgen.

Es ist auch möglich, dass die erfindungsgemäße thermoplastische Kunststoff-Folie auf der nicht mit der Kratzfestbeschichtung beschichteten Seite optional eine Klebstoffschicht aufweist. Für Klebstoffbeschichtungen sind beispielsweise solche basierend auf Polyurethan- oder Acrylatklebern geeignet. Derartige Klebstoffe sind dem Fachmann bekannt.

Für den Fall, dass die erfindungsgemäße thermoplastische Kunststoff-Folie auf der nicht mit der Kratzfestbeschichtung beschichteten Seite optional eine Klebstoffschicht aufweist, ist bevorzugt die Verwendung eines latent reaktiven Klebstoffs. Latent reaktive Klebstoffe sind dem Fachmann bekannt. Bevorzugte latent reaktive Klebstoffe sind solche, die eine wässrige Dispersion aufweisen, die ein Di- oder Polyisocyanat mit Schmelz- bzw. Erweichungstemperatur von > 30°C und ein mit Isocyanat reaktives Polymer enthalten. Vorzugsweise weist eine solche wässrige Dispersion eine Viskosität von mindestens 2000 mPas auf. Weiterhin bevorzugt handelt es sich bei dem Isocyanatreaktiven Polymer in dieser Dispersion um ein Polyurethan, das aus kristallisierenden Polymerketten aufgebaut ist, welche bei Messung mittels thermomechanischer Analyse (TMA) bei Temperaturen unter +110°C, bevorzugt bei Temperaturen unter +90°C, partiell oder vollständig dekristallisieren. Die Messung mittels TMA wird analog zu ISO 11359 Teil 3 "Bestimmung der Penetrationstemperatur" durchgeführt. Weiterhin bevorzugt handelt es sich bei dem Di- oder Polyisocyanat um ein solches ausgewählt aus der Gruppe aus Dimerisierungsprodukten, Trimerisierungsprodukten und Harnstoff-Derivaten des TDI (Toluylen-diisocyanat) bzw. IPDI (Isophorondiisocyanat). Solche latent reaktiven Klebstoffe sind beispielsweise in DE-A 10 2007 054 046 beschrieben. Durch die Verwendung solcher latent reaktiver Klebstoffe kann eine zusätzliche Erhöhung der Fälschungssicherheit des Sicherheits- und /oder Wertdokuments dadurch bewirkt werden, dass über die Kanten des Schichtaufbaus kein Wasserdampf und/oder Luft mehr ins Innere hinein diffundieren können und somit nicht mehr zu einer nachträglichen Delamination führen können. Solchen Schichtaufbauten können nicht mehr unzerstört getrennt werden.

Das erfindungsgemäße Sicherheits- und/oder Wertdokument weist bevorzugt auf beiden Seiten wenigstens eine Kratzfestbeschichtung hergestellt aus der Lackzusammensetzung auf.

Dazu enthält bei der erfindungsgemäßen Herstellung eines solchen Sicherheits- und/oder Wertdokuments der Folienstapel für die Herstellung von zwei kratzfest ausgerüsteten Außenschichten des Sicherheits- und/oder Wertdokuments wenigstens zwei thermoplastische Kunststoff-Folien mit jeweils nach außen gerichteter, kratzfest beschichteter Seite.

Bevorzugt ist in wenigstens eine der Kratzfestbeschichtung(en) des erfindungsgemäßen Sicherheits- und/oder Wertdokuments wenigstens eine Information, bevorzugt wenigstens eine Information im Mikrometer-Maßstab eingeprägt. Dadurch können zusätzliche Sicherheitsmerkmale in das erfindungsgemäße Sicherheits- und/oder Wertdokument eingebracht werden.

Von dem Begriff der Information ist im Rahmen der Erfindung jede Information umfasst, die in irgendeiner Form abbildbar - und im Falle einer eingeprägten Information auch prägbar - ist. Dabei kann es sich beispielsweise um einzelne Zahlen, Zahlenkombinationen, einzelne Buchstaben, Buchstabenkombinationen, Wörter, Schriftzüge, Symbole, sich wiederholende Muster, Linienstrukturen, Ornamente, Bilder oder sonstige Abbildungen sowie Kombinationen aus diesen handeln.

Bei der erfindungsgemäßen Herstellung eines solchen Sicherheits- und/oder Wertdokuments würde(n) gegebenenfalls die derartige(n) Information(en) während oder nach der Lamination, bevorzugt direkt während der Lamination des Folienstapels in wenigstens eine kratzfest ausgerüstete Außenschicht eingeprägt.

Die Lackzusammensetzung bietet den Vorteil, dass daraus hergestellte Kratzfestbeschichtungen den hohen Laminationstemperaturen bei der Herstellung von Sicherheits- und/oder Wertdokumenten, bevorzugt ID-Karten, stand halten, ohne dabei am Werkzeug zu kleben oder zerstört bzw. in ihren Eigenschaften beeinträchtigt zu werden. Übliche Laminationsbedingungen solcher Sicherheits- und/oder Wertdokumente, bevorzugt ID-Karte, sind beispielsweise Laminationstemperaturen von 100 bis 200°C, bevorzugt von 120 bis 190°C und Laminierdrücke von bis zu 380 N/cm², bevorzugt zwischen 200 und 350 N/cm² während der Laminierung.

Die mit der Lackzusammensetzung hergestellten Kratzfestbeschichtungen weisen bevorzugt Schichtdicken (Trockenfilmdicken) zwischen 1 und 25 µm, besonders bevorzugt zwischen 1 und 15 µm, ganz besonders bevorzugt zwischen 2 und 10 µm auf.

Bevorzugt handelt es sich bei dem erfindungsgemäßen Sicherheits- und/oder Wertdokument um ein Identifikationsdokument, bevorzugt eine ID-Karte (Identifikationskarte), wie z.B. einen Personalausweis, Reisepass, Führerschein, eine Bankkarte, Kreditkarte, Versicherungskarte, sonstige Ausweiskarte etc..

Das erfindungsgemäße Sicherheits- und/oder Wertdokument enthält bevorzugt weitere Kunststoffschichten, insbesondere bevorzugt thermoplastische Kunststoffschichten, enthaltend wenigstens einen thermoplastischen Kunststoff.

Das erfindungsgemäße Sicherheits- und/oder Wertdokument oder die erfindungsgemäße Kunststoff-Folie, bevorzugt das erfindungsgemäße Sicherheits- und/oder Wertdokument kann wenigstens eine gefüllte Kunststoffschicht, insbesondere bevorzugt thermoplastische Kunststoffschicht, enthalten. Bei der oder den gefüllten Kunststoffschichten kann es sich unabhängig voneinander bevorzugt jeweils um eine transluzente, weiße, schwarze oder farbige mit Füllstoffen gefüllte Schicht handeln. Besonders bevorzugt handelt es sich bei den gefüllten Kunststoffschichten unabhängig voneinander um transluzente oder weiße gefüllte Schichten. Solche transluzenten oder weiß eingefärbten gefüllten Kunststoffschichten enthalten bevorzugt Titandioxid, Zirkoniumdioxid, Bariumsulfat oder Glasfasern als Pigmente und/oder Füllstoffe. Weiterhin kommen als geeignete gefüllte Kunststoffschichten solche aus Teslin^{®} in Frage.

Bevorzugt handelt es sich bei den gefüllten Kunststoffschichten um solche mit einer Transmission im sichtbaren Wellenlängenbereich von 380 nm bis 780 nm von kleiner 50%, bevorzugt von kleiner 35 %, besonders bevorzugt von kleiner 25 %, in ganz besonders bevorzugten Ausführungsformen von kleiner als 15 %.

In bevorzugten Ausführungsformen der vorliegenden Erfindung kann das Sicherheits- und/oder Wertdokument oder die erfindungsgemäße Kunststoff-Folie, bevorzugt das erfindungsgemäße Sicherheits- und/oder Wertdokument wenigstens eine Kunststoffschicht, insbesondere bevorzugt thermoplastische Kunststoffschicht, enthalten, welche lasersensible Additive enthält.

Als lasersensible Additive kommen beispielsweise sogenannte Laser-Markier-Additive in Frage, d.h. solche aus einem Absorber im Wellenlängenbereich des zu verwendenden Lasers, bevorzugt im Wellenlängenbereich von ND:YAG-Lasern (Neodym-dotierte Yttrium-Aluminium-Granat-Laser). Solche Laser-Markier-Additive und deren Verwendung in Formmassen sind beispielsweise in WO-A 2004/50766 und WO-A 2004/50767 beschrieben und werden von der Fa. DSM unter dem Markennamen Micabs^{®} kommerziell angeboten. Weiterhin als lasersensible Additive geeignete Absorber sind Ruß, beschichtete Schichtsilikate wie z.B. in DE-A-195 22 397 beschrieben und unter den Markennamen Lazerflair^{®} kommerziell erhältlich, antimondotiertes Zinnoxid wie z.B. in US 6,693,657 beschrieben und unter den Markennamen Mark-it^{™} kommerziell erhältlich sowie phosphorhaltige Zinn-Kupfer-Mischoxide wie z.B. in WO-A 2006/042714 beschrieben. Bevorzugt ist es, wenn die Korngröße des lasersensiblen Additivs im Bereich von 100 nm bis 10 µm liegt, und besonders vorteilhaft, wenn sie im Bereich von 500 nm bis 2 µm liegt. Ein ganz besonders bevorzugtes lasersensibles Additiv ist Ruß.

Das erfindungsgemäße Sicherheits- und/oder Wertdokument oder die erfindungsgemäße Kunststoff-Folie, bevorzugt das erfindungsgemäße Sicherheits- und/oder Wertdokument kann eine oder mehrere weitere zusätzliche Schicht(en), vorzugsweise Kunststoffschichten, insbesondere bevorzugt thermoplastische Kunststoffschichten, aufweisen, über die beispielsweise weitere Informationen in das Sicherheits- oder Wertdokument, bevorzugt Identifikationsdokument eingebracht werden. Solche Informationen können beispielweise mittels wenigstens eines Verfahrens ausgewählt aus Druckverfahren, wie z.B. Sieb-, Ink-Jet-, Offset- oder Laserdruckverfahren etc., oder Gravierverfahren, wie z.B. Lasergravur, oder Beschichtungsverfahren, wie z.B. Rakeln, Tauchen etc., gegebenenfalls unter Zuhilfenahme von Maskentechnik etc. auf eine oder mehrere zur Herstellung des Dokuments eingesetzte Bestandteile, wie z.B. Folien, aufgebracht worden sein. Die Informationen können bevorzugt dekorativer Art oder individualisierender Art, wie z.B. Namen, Adressen, Photos etc. darstellen.

Der erfindungsgemäße Mehrschichtaufbau kann eine oder mehrere weitere zusätzliche Schicht(en), vorzugsweise Kunststoffschichten aufweisen, die z.B. dem Schutz des Sicherheits- und/oder Wertdokuments dienen. Dabei kann es sich z.B. um antistatisch ausgerüstete und/oder IRreflektierend ausgerüstete Schichten handeln.

Auch die erfindungsgemäße Kunststoff-Folie kann antistatisch ausgerüstet und/oder IRreflektierend ausgerüstet sein.

Die erfindungsgemäß zusätzlich zu den Kratzfestbeschichtungen hergestellt aus der Lackzusammensetzung vorhandenen Schichten, vorzugsweise Kunststoffschichten, insbesondere bevorzugt thermoplastische Kunststoffschichten, weisen bevorzugt jeweils eine Dicke von 20 µm bis 850 µm auf, wobei die einzelnen Kunststoffschichten gleiche oder unterschiedliche Schichtdicken aufweisen können. Bevorzugt sind Schichtdicken von 25 bis 500 µm, besonders bevorzugt von 30 bis 300 µm, ganz besonders bevorzugt von 50 bis 250 µm.

Die im erfindungsgemäßen Sicherheits- und/oder Wertdokument oder in der erfindungsgemäßen Kunststoff-Folie enthaltenen Kunststoffschichten, insbesondere bevorzugt thermoplastische Kunststoffschichten enthalten bevorzugt wenigstens einen thermoplastischen Kunststoff.

Als thermoplastische Kunststoffe für die Kunststoffschichten kommen unabhängig voneinander thermoplastische Kunststoffe ausgewählt aus Polymerisaten von ethylenisch ungesättigten Monomeren und/oder Polykondensaten von bifunktionellen reaktiven Verbindungen in Frage. Für bestimmte Anwendungen kann es vorteilhaft sein, einen transparenten thermoplastischen Kunststoff einzusetzen. In besonders bevorzugten Ausführungsformen können die genannten Kunststoffschichten wenigstens einen thermoplastischen Kunststoff ausgewählt aus den vorangehend genannten Gruppen übereinstimmend aufweisen.

Besonders geeignete thermoplastische Kunststoffe sind Polycarbonate oder Copolycarbonate auf Basis von Diphenolen, Poly- oder Copolyacrylate und Poly- oder Copolymethacrylate wie beispielhaft und vorzugsweise Polymethylmethacrylat, Poly- oder Copolymere mit Styrol wie beispielhaft und vorzugsweise transparentes Polystyrol oder Polystyrolacrylnitril (SAN), transparente thermoplastische Polyurethane, sowie Polyolefine, wie beispielhaft und vorzugsweise transparente Polypropylentypen oder Polyolefine auf der Basis von cyclischen Olefinen (z.B. TOPAS^{®}, Hoechst) oder Polyolefin basierte Materialien wie z.B. Teslin^{®}, Poly- oder Copolykondensate der Terephthalsäure, wie beispielhaft und vorzugsweise Poly- oder Copolyethylenterephthalat (PET oder CoPET), glycol-modifiziertes PET (PETG) oder Poly- oder Copolybutylenterephthalat (PBT oder CoPBT) oder Mischungen aus den vorangehend genannten.

Ganz besonders bevorzugt sind Polycarbonate oder Copolycarbonate, insbesondere mit mittleren Molekulargewichten M_{w} von 500 bis 100 000, bevorzugt von 10 000 bis 80 000, besonders bevorzugt von 15 000 bis 40 000 oder Blends enthaltend wenigstens ein solches Polycarbonat oder Copolycarbonat. Weiterhin bevorzugt sind auch Blends der vorgenannten Polycarbonate oder Copolycarbonate mit wenigstens einem Poly- oder Copolykondensat der Terephthalsäure, insbesondere wenigstens einem solchen Poly- oder Copolykondensat der Terephthalsäure mit mittleren Molekulargewichten M_{w} von 10.000 bis 200.000, bevorzugt von 26.000 bis 120.000. In besonders bevorzugten Ausführungsformen der Erfindung handelt es sich bei dem Blend um einen Blend aus Polycarbonat oder Copolycarbonat mit Poly- oder Copolybutylenterephthalat. Bei einem solchen Blend aus Polycarbonat oder Copolycarbonat mit Poly- oder Copolybutylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat, vorzugsweise mit 1 bis 90 Gew.-% Polycarbonat und 99 bis 10 Gew.-% Polybutylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat um einen solchen mit 20 bis 85 Gew.-% Polycarbonat oder Copolycarbonat und 80 bis 15 Gew.-% Poly- oder Copolybutylenterephthalat, vorzugsweise mit 20 bis 85 Gew.-% Polycarbonat und 80 bis 15 Gew.-% Polybutylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat um einen solchen mit 35 bis 80 Gew.-% Polycarbonat oder Copolycarbonat und 65 bis 20 Gew.-% Poly- oder Copolybutylenterephthalat, vorzugsweise mit 35 bis 80 Gew.-% Polycarbonat und 65 bis 20 Gew.-% Polybutylenterephthalat handeln, wobei sich die Anteile zu 100 Gew.-% addieren.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (III) sein,

HO-Z-OH (III)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Besonders bevorzugte Dihydroxyarylverbindungen sind Resorcin, 4,4'-Dihydroxydiphenyl, Bis-(4-hydroxyphenyl)-diphenyl-methan, 1,1 -Bis-(4-hydroxyphenyl)-1 -phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl, 2,2-Bis-(4-hydroxyphenyl)-propan und 1,1-Bis-(4-hydroxyphenyl)-3,3,5-trimethyl-cyclohexan.

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan hergestellt werden.

Geeignete Kohlensäurederivate können beispielsweise Diarylcarbonate der allgemeinen Formel (IV) sein, 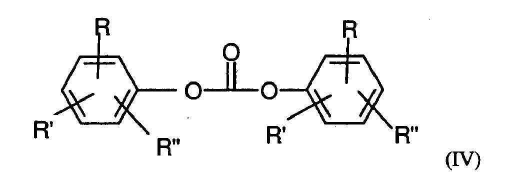 worin
R, R' und R" unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R'" bedeuten kann, wobei R"' für Wasserstoff, lineares oder verzweigtes C₁-C₃₄-Alkyl, C₇-C₃₄-Alkylaryl oder C₆-C₃₄-Aryl steht.

Besonders bevorzugte Diarylverbindungen sind Diphenylcarbonat, 4-tert-Butylphenyl-phenylcarbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (V) handeln, 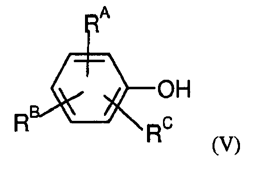 wobei
R^{A} für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
R^{B}, R^{C} unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste , bezogen auf die Dicarbonsäurekomponente, und mindestens 80 Mol-%, vorzugsweise mindestens 90 Mol-% Ethylenglykol- und/oder Butandiol-1,4-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer

Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylenglycol- bzw. Butandiol-1,4-glykol-Resten bis zu 20 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In einer besonders bevorzugten Ausführungsform der vorliegenden Erfindung enthalten möglichst viele der vorhandenen thermoplastischen Kunststoffschichten wenigstens ein Polycarbonat oder Copolycarbonat.

Das erfindungsgemäße Sicherheits- und/oder Wertdokument oder die erfindungsgemäße Kunststoff-Folie, bevorzugt das erfindungsgemäße Sicherheits- und/oder Wertdokument kann in den Bereichen, in denen die Kunststoffschichten direkten Kontakt zueinander aufweisen, einen monolithischen Schichtverbund aufweisen. Ein solcher monolithischer Schichtverbund bietet besonderen Schutz gegen nachträgliches, zerstörungsfreies Auftrennen des Schichtverbundes.

Für den Fall, dass es sich bei den Kunststoffen der einzelnen Kunststoffschichten um gleiche oder ähnliche Kunststoffe bzw. Kunststoffgemische handelt, insbesondere für den Fall eines monolithischen Schichtverbundes, sind unter einzelnen Schichten die Teile des Schichtverbundes zu verstehen, die bei der Herstellung des Mehrschichtverbundes (z.B. in Form des erfindungsgemäßen Sicherheits- und/oder Wertdokuments) aus verschiedenen Komponenten, z.B. verschiedenen Folien, zum Schichtverbund beigesteuert wurden.

Das erfindungsgemäße Sicherheits- und/oder Wertdokument kann weiterhin ein oder mehrere elektronische Bauteile enthalten.

Die folgenden Ausführungsbeispiele dienen der exemplarischen Erläuterung der Erfindung, ohne diese jedoch einzuschränken.

### Beispiele

### Verwendete Abkürzungen und Handelsnamen:

| | |
|---|---|
| HDDA | 1,6-Hexandiol-Diacrylat |
| PTTA | Pentaerythrit-Tetraacrylat |
| TMPTA | Trimethylolpropantriacrylat |
| HDI | 1,6-Hexamethylendiisocyanat |
| PTTA/HDI | Reaktionsprodukt aus PTTA und HDI |
| Irgacure^{®} 184 | 1-Hydroxy-cyclohexyl-phenyl-keton (Photoinitiator von Ciba Speciality Chemicals) |
| BYK^{®} 306 | Lösung eines polyethermodifizierten Polydimethylsiloxan in einem Xylol/Monophenyl-glykol-Gemisch (Mischungsverhältnis 7/2), Feststoffgehalt 12,5 Gew.-% (Benetzungshilfsmittel von BYK Additives & Instruments) |

### Verwendete Komponenten I) bis IV):

| | |
|---|---|
| Komponente I) | HDDA |
| Komponente II) | ethoxyliertes TMPTA mit einem Molekulargewicht von gewichtsmittleren Molekulargewicht von M_{w} ca. 500 g/mol (bestimmt über GPC gegen Polystyrol als Standard) |
| Komponente III) | PTTA (für Beispiele 1 bis 7 und Vergleichsbeispiele 1 bis 4) |
| Komponente IV) | TMPTA |
| Komponente III) | PTTA/HDI (für Beispiel 8) |

### Beispiele 1 bis 8 (erfindungsgemäß) und Vergleichsbeispiele 1 bis 4

### Herstellung der Lackzusammensetzungen:

Entsprechend den in den Tab. 1a und 1b beschriebenen Zusammensetzungen wurden die angegeben Gew.-Teile HDDA vorgelegt und 7 Gew.-Teile des Photoinitiators Irgacure^{®} 184 hinzugegeben. Die Mischung wurde gerührt, bis der Fotoinitiator gelöst war. Danach wurde die Fotoinitiatorlösung fein filtriert (Filter mit einer Porenweite von 1 µm). Anschließend wurden die anderen Monomere (TMPTA, ethoxyliertes TMPTA, PTTA oder PTTA-Reaktionsprodukt mit HDI) entsprechend der angegeben Gew.-Teile, sowie zusätzlich 0,9 Gew.-Teile BYK^{®} 306 nacheinander unter Rühren hinzugefügt und die Mischung 15 Minuten nachgerührt. Der Lack wurde noch einmal fein filtriert (Filter mit einer Porenweite von 1 µm).

**Tab. 1a**

| **Komponente** | **Beispiel 1** | **Beispiel 2** | **Vergleichs-beispiel 1** | **Vergleichs-beispiel 2** | **Beispiel 3** | **Beispiel 4** |
|---|---|---|---|---|---|---|
| **HDDA¹⁾** | 19,5 | 48,8 | 73,8 | 11,9 | 25,3 | 24,2 |
| **TMPTA¹⁾** | 33,0 | 20,7 | 10,5 | 36,0 | 30,4 | 16,7 |
| **Ethoxyliertes** | 20,5 | 20,7 | 10,5 | 22,5 | 19,0 | 25,5 |
| **TMPTA¹⁾** | | | | | | |
| **PTTA¹⁾** | 27,0 | 9,8 | 5,2 | 29,6 | 25,3 | 33,6 |
| ∑ Gew.-Teile | 100 | 100 | 100 | 100 | 100 | 100 |

| | | | | | | |
|---|---|---|---|---|---|---|
| ¹⁾ Angaben in Gew.-Teilen | | | | | | |

**Tab.1b**

| **Komponente** | **Beispiel 5** | **Vergleichs-beispiel 3** | **Beispiel 6** | **Beispiel7** | **Vergleichs-beispiel 4** | **Beispiel 8** |
|---|---|---|---|---|---|---|
| **HDDA¹⁾** | 15,3 | 21,8 | 18,0 | 18,2 | 14,2 | 24,9 |
| **TMPTA¹⁾** | 47,5 | 36,9 | 30,4 | 30,7 | 24,0 | 29,8 |
| **Ethoxyliertes** | 16,1 | 11,1 | 26,6 | 19,1 | 14,9 | 18,4 |
| **TMPTA¹⁾** | | | | | | |
| **PTTA¹⁾** | 21,1 | 30,2 | 25,0 | 32,0 | 46,9 | 26,9 |
| ∑ Gew.-Teile | 100 | 100 | 100 | 100 | 100 | 100 |

| | | | | | | |
|---|---|---|---|---|---|---|
| ¹⁾ Angaben in Gew.-Teilen | | | | | | |

### Herstellung der beschichteten Folien:

Mit den so erhaltenen Lackusammensetzungen wurden Polycarbonatfolien Makrofol^{®} DE 1-1 in DIN A4 Größe und mit einer Dicke von 175 µm mittels Rakel mit 5 µm Nassfilmdicke (entspricht ca. 5 µm Trockenfilmdicke) mit der jeweiligen Lackzusammensetzung beschichtet. Anschließend wurden die beschichteten Folien in einer UV-Anlage (der Firma ssr Engineering GmbH, BS 407 dr conveyor mit Hg-Dampflampe) mit einer UV-Dosis von 350 mJ/cm² (Lightbug ILT 490) gehärtet.

### Herstellung der laminierten Karten:

Zwei weiß pigmentierte Polycarbonatfolien Makrofol^{®} ID 4-4 010207 in DIN A4 Größe mit einer Dicke von 250 µm wurden zwischen zwei erfindungsgemäße mit der gleichen Lackzusammensetzung beschichtete Folien gelegt. Dabei wurden die erfindungsgemäßen Folien mit der Beschichtung nach außen angeordnet. Der Folienstapel wurde in eine Laminierpresse der Firma Bürkle gelegt und unter Druck und Temperatur laminiert. Laminiert wurde mit folgenden Parametern:
Temperatur: 175 °C
Niedriger Vordruck während der Aufwärmzeit: 15 N/cm²
Aufwärmdauer: 8 Minuten.
Hoher Druck während der Laminierung: 300 N/cm²
Laminierdauer: 2 Minuten.

Anschließend wurde die Abkühlung der Presse eingeleitet. Abgekühlt wurde unter anhaltender Druckbeaufschlagung. Bei Erreichen einer Temperatur von 38°C öffnete die Presse.

Aus dem laminierten Bogen wurden Karten gestanzt, welche die Maße einer Karte nach ISO 7810 hatten.

Bis auf den mit der Lackzusammensetzung aus Vergleichsbeispiel 1 beschichteten Folien hergestellten Folienstapel, zeigten alle beschichteten Folien gute Laminierbarkeit (vgl. auch Tab. 2a und 2b). Die mit der Lackzusammensetzung aus Vergleichsbeispiel 1 beschichteten Folien klebten nach Entfernen aus der Presse und konnten nicht zu Karten weiter verarbeitet werden.

In jeweils eine der erhaltenen Karten wurden auf eine der Oberflächen unter den gleichen Bedingungen wie den zur Lamination verwendeten Multiple Laser Image (MLI) und Changeable Laser Image (CLI) Strukturen eingeprägt. Alle erhaltenen Karten ließen sich mit diesen Strukturen prägen, ohne dass die vorhandene Kratzfestbeschichtung Risse zeigte (vgl. auch Tab. 2a und 2b).

Die Karten wurden zunächst einem Biegetest mit der Hand unterzogen. Dabei wird die Karte entlang der flachen Querrichtung mit der Hand einmal in der Mitte derart gebogen, dass die beiden Enden aufeinander treffen (Biegung um 180°). Von den Karten, die keine oder nur partielle Risse nach diesem Biegetest zeigten, wurde eine weitere solche Karte einem Knicktest nach ISO 7810 unterzogen.

**Tab. 2a**

| **Eigenschaften/ Test** | **Beispiel 1** | **Beispiel 2** | **Vergleichs-beispiel 1** | **Vergleichs-beispiel 2** | **Beispiel 3** | **Beispiel 4** |
|---|---|---|---|---|---|---|
| **Laminierbarkeit** | ja | ja | nein | ja | ja | ja |
| (175°C;300 N/cm²) | | | | | | |
| **Prägbarkeit** | ja | ja | nein | ja | ja | ja |
| (175°C;300 N/cm²) | | | | | | |
| **Biegetest** | keine Risse | keine Risse | - | durchgehende Risse | keine Risse | nur partielle Risse |
| (per Hand, 180°) | | | | | | |

**Tab. 2b**

| **Eigenschaften/ Test** | **Beispiel 5** | **Vergleichs-beispiel 3** | **Beispiel 6** | **Beispiel 7** | **Vergleichs-beispiel 4** | **Beispiel 8** |
|---|---|---|---|---|---|---|
| **Laminierbarkeit** | ja | ja | ja | ja | ja | ja |
| (175°C;300 N/cm²) | | | | | | |
| **Prägbarkeit** | ja | ja | ja | ja | ja | ja |
| (175°C;300 N/cm²) | | | | | | |
| **Biegetest** | keine Risse | durchgehende Risse | keine Risse | nur partielle Risse | durchgehende Risse | keine Risse |
| (per Hand, 180°) | | | | | | |

Nach diesem Test zeigten alle erfindungsgemäßen Karten entweder gar keine oder nur partielle Risse in der Kratzfestbeschichtung, wohingegen die Karten aus den Vergleichsbeispielen bereits durchgehende Risse aufwiesen (vgl. Tab. 2a und 2b).

Von den Karten, die keine oder nur partielle Risse nach diesem Biegetest zeigten, wurde eine weitere solche Karte einem Knicktest nach ISO 7810 unterzogen. Die Karte aus Beispiel 2 zeigte auch nach 20.000 Knicksequenzen keinerlei Rissbildung. Die Karten aus den Beispielen 3 und 4 zeigten nach 20.000 Knicksequenzen lediglich minimale Risse. Die Karten aus Beispiel 1 und 7 zeigten zwischen 10.000 und 15.000 Knicksequenzen Risse von wenigen mm Länge. Die Karten aus Beispiel 5 und 6 zeigten zwischen 15.000 und 20.000 Knicksequenzen Risse von wenigen mm Länge . Die Karte aus Beispiel 1 zeigte zwischen 10.000 und 15.000 Knicksequenzen Risse von wenigen mm Länge . Zur Karte aus Beispiel 7 und 8 wurde kein Knicktest durchgeführt. Die Ergebnisse zeigen, dass keine der erfindungsgemäßen Karten bei 20.000 Knicksequenzen durchgehende Risse zeigt. Bei manchen Beispielen wurden lediglich partielle Risse im Maßstab von nur wenigen mm beobachtet, so dass die erfindungsgemäßen Karten den Anforderungen der entsprechenden Norm alle genügen.

Es wurden zudem die Lösungsmittelbeständigkeiten der Karten aus den Beispielen 1 bis 8 und den Vergleichsbeispielen 2 bis 4 gegenüber i-Propanol, Xylol, Methoxypropylacetat, Ethylacetat und Aceton bestimmt, indem die Karten für eine Stunde bei 23°C mit einem mit dem genannten Lösungsmittel getränkten Textil beaufschlagt wurden. Keine der Karten zeigte eine sichtbare Veränderung und keine der Karten konnte nach dem Test an den mit dem Lösungsmittel beaufschlagten Stellen durch Kratzen verletzt werden.

Des Weiteren wurde die Kratzfestigkeit der Beschichtungen überprüft, indem ein Stück Stahlwolle (Typ 00) auf die Beschichtung eines laminierten Bogens gelegt, mit einem 500 g schweren Hammer beaufschlagt und 20-mal über eine 10 cm lange Strecke gezogen wurde, ohne dabei zusätzlichen Druck auf den Hammer auszuüben. Danach wurden der Glanzgrad und Haze (gemessen nach ISO 2813 und ISO 13803 mit micro-haze plus der Firma BYK Additives & Instruments) der so behandelten Beschichtung gemessen. Lediglich die Beschichtungen die mit den Lackzusammensetzungen gemäß den Vergleichsbeispielen 2 und 3 hergestellt wurden, zeigten sichtbare Kratzspuren.

Die Ergebnisse zeigen insgesamt, dass die erfindungsgemäßen Karten sowohl den hohen Anforderungen an die Biegbarkeit und Bruchfestigkeit solcher Dokumente genügen als auch gute Chemikalienbeständigkeit und Kratzfestigkeit aufweisen. Die mit den erfindungsgemäßen Lackzusammensetzungen beschichteten Folien halten zudem den hohen Laminationstemperaturen stand und können mit feinen µm-Strukturen geprägt werden, ohne zu reißen. Im Gegensatz dazu zeigen die Karten laut Vergleichsbeispielen keine ausreichende Biegbarkeit und Bruchfestigkeit und teilweise zudem keine ausreichende Kratzfestigkeit.

## Patentansprüche

1. Sicherheits- und/oder Wertdokument enthaltend wenigstens eine Kratzfestbeschichtung, **dadurch gekennzeichnet, dass** die Kratzfestbeschichtung hergestellt wurde aus einer Lackzusammensetzung enthaltend
I) 12 bis 70 Gew.-Teile wenigstens eines C₂-C₁₂-Diol-Diacrylats oder C₂-C₁₂-Diol-Dimethacrylats, worin C₂-C₁₂ für einen linearen Alkylenrest steht, der gegebenenfalls mit einer Methylgruppe substituiert sein kann oder durch ein oder mehrere Sauerstoff-Atom(e) unterbrochen und optional mit einer oder mehreren Methylgruppe(n) substituiert sein kann,
II) 12 bis 40 Gew.-Teile wenigstens eines alkoxylierten, bevorzugt ethoxylierten Mono-, Di-, Tri-, Tetra-, Penta- oder Hexaacrylats oder alkoxylierten, bevorzugt ethoxylierten Mono-, Di-, Tri-, Tetra-, Penta- oder Hexamethacrylats,
III) 0 bis 40 Gew.-Teile wenigstens eines Monomeren ausgewählt aus der Gruppe umfassend Pentaerythrit-Triacrylat, Pentaerythrit-Tetraacrylat, Dipentaerythrit-Tetraacrylat, Dipentaerythrit-Pentaacrylat Dipentaerythrit-Hexaacrylat, Pentaerythrit-Trimethacrylat, Pentaerythrit-Tetramethacrylat, Dipentaerythrit-Tetramethacrylat, Dipentaerythrit-Pentamethacrylat, Dipentaerythrit-Hexamethacrylat und deren Reaktionsprodukten mit aliphatischen oder aromatischen Diisocyanaten,
IV) 5 bis 60 Gew.-Teile wenigstens eines weiteren Mono-, Di- oder Triacrylats oder Mono-, Di- oder Trimethacrylats,
wobei sich die Gewichtsteile der Komponenten I) bis IV) zu 100 Gew.-Teilen addieren,
und zusätzlich zu diesen 100 Gew.-Teilen wenigstens enthaltend
V) 0,1 bis 10 Gew.-Teile wenigstens eines Photoinitiators.

2. Sicherheits- und/oder Wertdokument gemäß Anspruch 1, **dadurch gekennzeichnet, dass** die Lackzusammensetzung 15 bis 60 Gew.-Teile, bevorzugt 20 bis 55 Gew.-Teile der Komponente I) enthält.

3. Sicherheits- und/oder Wertdokument gemäß Anspruch 1 oder 2, **dadurch gekennzeichnet, dass** die Lackzusammensetzung 12 bis 35 Gew.-Teile, bevorzugt 15 bis 30 Gew.-Teile der Komponente II) enthält.

4. Sicherheits- und/oder Wertdokument gemäß wenigstens einem der Ansprüche 1 bis 3, **dadurch gekennzeichnet, dass** die Lackzusammensetzung 0 bis 30 Gew.-Teile, bevorzugt 0,1 bis 30 Gew.-Teile der Komponente III) enthält.

5. Sicherheits- und/oder Wertdokument gemäß wenigstens einem der Ansprüche 1 bis 4, **dadurch gekennzeichnet, dass** es sich um ein Identifikationsdokument handelt.

6. Sicherheits- und/oder Wertdokument gemäß wenigstens einem der Ansprüche 1 bis 5, **dadurch gekennzeichnet, dass** es auf beiden Seiten wenigstens eine Kratzfestbeschichtung hergestellt aus der Lackzusammensetzung aufweist.

7. Sicherheits- und/oder Wertdokument gemäß wenigstens einem der Ansprüche 1 bis 6, **dadurch gekennzeichnet, dass** in wenigstens eine der Kratzfestbeschichtung(en) eine Information eingeprägt wurde.

8. Sicherheits- und/oder Wertdokuments gemäß wenigstens einem der Ansprüche 1 bis 7, bei dem ein Folienstapel enthaltend mehrere thermoplastische Kunststoff-Folien gebildet und anschließend laminiert wird und der Folienstapel für die Herstellung wenigstens einer kratzfest ausgerüsteten Außenschicht des Sicherheits- und/oder Wertdokuments wenigstens eine thermoplastische Kunststoff-Folie mit einer nach außen gerichteten, kratzfest beschichteten Seite enthält.

9. Sicherheits- und/oder Wertdokuments gemäß Anspruch 8, **dadurch gekennzeichnet, dass** der Folienstapel für die Herstellung von zwei kratzfest ausgerüsteten Außenschichten des Sicherheits- und/oder Wertdokuments wenigstens zwei thermoplastische Kunststoff-Folien mit jeweils nach außen gerichteter, kratzfest beschichteter Seite enthält.

10. Sicherheits- und/oder Wertdokuments gemäß Anspruch 8 oder 9, **dadurch gekennzeichnet, dass** während oder nach der Lamination des Folienstapels in wenigstens eine kratzfest ausgerüstete Außenschicht wenigstens eine Information eingeprägt wird.

11. Sicherheits- und/oder Wertdokuments gemäß wenigstens einem der Ansprüche 8 bis 10, **dadurch gekennzeichnet, dass** es sich bei der kratzfest beschichteten thermoplastischen Kunststoff-Folie um eine Folie enthaltend wenigstens ein Polycarbonat oder Copolycarbonat handelt.

12. Thermoplastische Kunststoff-Folie, **dadurch gekennzeichnet, dass** sie wenigstens eine Beschichtung hergestellt aus einer Lackzusammensetzung enthaltend
I) 12 bis 70 Gew.-Teile wenigstens eines C₂-C₁₂-Diol-Diacrylats oder C₂-C₁₂-Diol-Dimethacrylats, worin C₂-C₁₂ für einen linearen Alkylenrest steht, der gegebenenfalls mit einer Methylgruppe substituiert sein kann oder durch ein oder mehrere Sauerstoffβ-Atom(e) unterbrochen und optional mit einer oder mehreren Methylgruppe(n) substituiertsein kann,
II) 12 bis 40 Gew.-Teile wenigstens eines alkoxylierten, bevorzugt ethoxylierten Mono-, Di-, Tri-, Tetra-, Penta- oder Hexaacrylats oder alkoxylierten, bevorzugt ethoxylierten Mono-, Di-, Tri-, Tetra-, Penta- oder Hexamethacrylats,
III) 0 bis 40 Gew.-Teile wenigstens eines Monomeren ausgewählt aus der Gruppe umfassend Pentaerythrit-Triacrylat, Pentaerythrit-Tetraacrylat, Dipentaerythrit-Tetraacrylat, Dipentaerythrit-Pentaacrylat Dipentaerythrit-Hexaacrylat, Pentaerythrit-Trimethacrylat, Pentaerythrit-Tetramethacrylat, Dipentaerythrit-Tetramethacrylat, Dipentaerythrit-Pentamethacrylat, Dipentaerythrit-Hexamethacrylat und deren Reaktionsprodukten mit aliphatischen oder aromatischen Diisocyanaten,
IV) 5 bis 60 Gew.-Teile wenigstens eines weiteren Mono-, Di- oder Triacrylats oder Mono-, Di- oder Trimethacrylats,
wobei sich die Gewichtsteile der Komponenten I) bis IV) zu 100 Gew.-Teilen addieren, und zusätzlich zu diesen 100 Gew.-Teilen wenigstens enthaltend
V) 0,1 bis 10 Gew.-Teile wenigstens eines Photoinitiators,
aufweist.

13. Lackzusammensetzung enthaltend
I) 12 bis 70 Gew.-Teile wenigstens eines C₂-C₁₂-Diol-Diacrylats oder C₂-C₁₂-Diol-Dimethacrylats, worin C₂-C₁₂ für einen linearen Alkylenrest steht, der gegebenenfalls mit einer Methylgruppe substituiert sein kann oder durch ein oder mehrere Sauerstoff-Atom(e) unterbrochen und optional mit einer oder mehreren Methylgruppe(n) substituiertsein kann,
II) 12 bis 40 Gew.-Teile wenigstens eines alkoxylierten, bevorzugt ethoxylierten Mono-, Di-, Tri-, Tetra-, Penta- oder Hexaacrylats oder alkoxylierten, bevorzugt ethoxylierten Mono-, Di-, Tri-, Tetra-, Penta- oder Hexamethacrylats,
III) 0 bis 40 Gew.-Teile wenigstens eines Monomeren ausgewählt aus der Gruppe umfassend Pentaerythrit-Triacrylat, Pentaerythrit-Tetraacrylat, Dipentaerythrit-Tetraacrylat, Dipentaerythrit-Pentaacrylat Dipentaerythrit-Hexaacrylat, Pentaerythrit-Trimethacrylat, Pentaerythrit-Tetramethacrylat, Dipentaerythrit-Tetramethacrylat, Dipentaerythrit-Pentamethacrylat, Dipentaerythrit-Hexamethacrylat und deren Reaktionsprodukten mit aliphatischen oder aromatischen Diisocyanaten,
IV) 5 bis 60 Gew.-Teile wenigstens eines weiteren Mono-, Di- oder Triacrylats oder Mono-, Di- oder Trimethacrylats,
wobei sich die Gewichtsteile der Komponenten I) bis IV) zu 100 Gew.-Teilen addieren,
und zusätzlich zu diesen 100 Gew.-Teilen wenigstens enthaltend
V) 0,1 bis 10 Gew.-Teile wenigstens eines Photoinitiators.

14. Verwendung einer Lackzusammensetzung enthaltend
I) 12 bis 70 Gew.-Teile wenigstens eines C₂-C₁₂-Diol-Diacrylats oder C₂-C₁₂-Diol-Dimethacrylats, worin C₂-C₁₂ für einen linearen Alkylenrest steht, der gegebenenfalls mit einer Methylgruppe substituiert sein kann oder durch ein oder mehrere Sauerstoff-Atom(e) unterbrochen und optional mit einer oder mehreren Methylgruppe(n) substituiert sein kann,
II) 12 bis 40 Gew.-Teile wenigstens eines alkoxylierten, bevorzugt ethoxylierten Mono-, Di-, Tri-, Tetra-, Penta- oder Hexaacrylats oder alkoxylierten, bevorzugt ethoxylierten Mono-, Di-, Tri-, Tetra-, Penta- oder Hexamethacrylats,
III) 0 bis 40 Gew.-Teile wenigstens eines Monomeren ausgewählt aus der Gruppe umfassend Pentaerythrit-Triacrylat, Pentaerythrit-Tetraacrylat, Dipentaerythrit-Tetraacrylat, Dipentaerythrit-Pentaacrylat Dipentaerythrit-Hexaacrylat, Pentaerythrit-Trimethacrylat, Pentaerythrit-Tetramethacrylat, Dipentaerythrit-Tetramethacrylat, Dipentaerythrit-Pentamethacrylat, Dipentaerythrit-Hexamethacrylat und deren Reaktionsprodukten mit aliphatischen oder aromatischen Diisocyanaten,
IV) 5 bis 60 Gew.-Teile wenigstens eines weiteren Mono-, Di- oder Triacrylats oder Mono-, Di- oder Trimethacrylats,
wobei sich die Gewichtsteile der Komponenten I) bis IV) zu 100 Gew.-Teilen addieren, und zusätzlich zu diesen 100 Gew.-Teilen wenigstens enthaltend
V) 0,1 bis 10 Gew.-Teile wenigstens eines Photoinitiators,
zur Herstellung wenigstens einer Kratzfestbeschichtung eines Sicherheits- und/oder Wertdokuments.

## Claims

1. Document of security and/or value, comprising at least one scratch-resistant coating, **characterized in that** the scratch-resistant coating has been produced from a varnish composition comprising
I) 12 to 70 parts by weight of at least one C₂-C₁₂ diol diacrylate or C₂-C₁₂ diol dimethacrylate, in which C₂-C₁₂ stands for a linear alkylene radical which may optionally be substituted by a methyl group or may be interrupted by one or more oxygen atoms and optionally substituted by one or more methyl groups,
II) 12 to 40 parts by weight of at least one alkoxylated, preferably ethoxylated mono-, di-, tri-, tetra-, penta- or hexaacrylate or alkoxylated, preferably ethoxylated mono-, di-, tri-, tetra-, penta- or hexamethacrylate,
III) 0 to 40 parts by weight of at least one monomer selected from the group encompassing pentaerythritol triacrylate, pentaerythritol tetraacrylate, dipentaerythritol tetraacrylate, dipentaerythritol pentaacrylate, dipentaerythritol hexaacrylate, pentaerythritol trimethacrylate, pentaerythritol tetramethacrylate, dipentaerythritol tetramethacrylate, dipentaerythritol pentamethacrylate, dipentaerythritol hexamethacrylate and reaction products thereof with aliphatic or aromatic diisocyanates,
IV) 5 to 60 parts by weight of at least one further mono-, di- or triacrylate or mono-, di- or trimethacrylate,
the parts by weight of components I) to IV) adding up to 100 parts by weight,
and further to these 100 parts by weight at least comprising
V) 0.1 to 10 parts by weight of at least one photoinitiator.

2. Document of security and/or value according to Claim 1, **characterized in that** the varnish composition comprises 15 to 60 parts by weight, preferably 20 to 55 parts by weight, of component I).

3. Document of security and/or value according to Claim 1 or 2, **characterized in that** the varnish composition comprises 12 to 35 parts by weight, preferably 15 to 30 parts by weight, of component II).

4. Document of security and/or value according to at least one of Claims 1 to 3, **characterized in that** the varnish composition comprises 0 to 30 parts by weight, preferably 0.1 to 30 parts by weight, of component III).

5. Document of security and/or value according to at least one of Claims 1 to 4, **characterized in that** it is an identification document.

6. Document of security and/or value according to at least one of Claims 1 to 5, **characterized in that** on both sides it has at least one scratch-resistant coating produced from the varnish composition.

7. Document of security and/or value according to at least one of Claims 1 to 6, **characterized in that** a datum has been embossed into at least one of the scratch-resistant coatings.

8. Document of security and/or value according to at least one of Claims 1 to 7, wherein a film stack comprising a plurality of thermoplastic polymeric films is formed and subsequently laminated and the film stack for producing at least one scratch-resistantly furnished outer layer of the document of security and/or value comprises at least one thermoplastic polymeric film having an outwardly directed, scratch-resistantly coated side.

9. Document of security and/or value according to Claim 8, **characterized in that** the film stack for producing two scratch-resistantly furnished outer layers of the document of security and/or value comprises at least two thermoplastic polymeric films each having an outwardly directed, scratch-resistantly coated side.

10. Document of security and/or value according to Claim 8 or 9, **characterized in that** during or after the lamination of the film stack, at least one datum is embossed into at least one scratch-resistantly furnished outer layer.

11. Document of security and/or value according to at least one of Claims 8 to 10, **characterized in that** the scratch-resistantly coated thermoplastic polymeric film is a film comprising at least one polycarbonate or copolycarbonate.

12. Thermoplastic polymeric film **characterized in that** it has at least one coating produced from a varnish composition comprising
I) 12 to 70 parts by weight of at least one C₂-C₁₂ diol diacrylate or C₂-C₁₂ diol dimethacrylate, in which C₂-C₁₂ stands for a linear alkylene radical which may optionally be substituted by a methyl group or may be interrupted by one or more oxygen atoms and optionally substituted by one or more methyl groups,
II) 12 to 40 parts by weight of at least one alkoxylated, preferably ethoxylated mono-, di-, tri-, tetra-, penta- or hexaacrylate or alkoxylated, preferably ethoxylated mono-, di-, tri-, tetra-, penta- or hexamethacrylate,
III) 0 to 40 parts by weight of at least one monomer selected from the group encompassing pentaerythritol triacrylate, pentaerythritol tetraacrylate, dipentaerythritol tetraacrylate, dipentaerythritol pentaacrylate, dipentaerythritol hexaacrylate, pentaerythritol trimethacrylate, pentaerythritol tetramethacrylate, dipentaerythritol tetramethacrylate, dipentaerythritol pentamethacrylate, dipentaerythritol hexamethacrylate and reaction products thereof with aliphatic or aromatic diisocyanates,
IV) 5 to 60 parts by weight of at least one further mono-, di- or triacrylate or mono-, di- or trimethacrylate,
the parts by weight of components I) to IV) adding up to 100 parts by weight,
and further to these 100 parts by weight at least comprising
V) 0.1 to 10 parts by weight of at least one photoinitiator.

13. Varnish composition comprising
I) 12 to 70 parts by weight of at least one C₂-C₁₂ diol diacrylate or C₂-C₁₂ diol dimethacrylate, in which C₂-C₁₂ stands for a linear alkylene radical which may optionally be substituted by a methyl group or may be interrupted by one or more oxygen atoms and optionally substituted by one or more methyl groups,
II) 12 to 40 parts by weight of at least one alkoxylated, preferably ethoxylated mono-, di-, tri-, tetra-, penta- or hexaacrylate or alkoxylated, preferably ethoxylated mono-, di-, tri-, tetra-, penta- or hexamethacrylate,
III) 0 to 40 parts by weight of at least one monomer selected from the group encompassing pentaerythritol triacrylate, pentaerythritol tetraacrylate, dipentaerythritol tetraacrylate, dipentaerythritol pentaacrylate, dipentaerythritol hexaacrylate, pentaerythritol trimethacrylate, pentaerythritol tetramethacrylate, dipentaerythritol tetramethacrylate, dipentaerythritol pentamethacrylate, dipentaerythritol hexamethacrylate and reaction products thereof with aliphatic or aromatic diisocyanates,
IV) 5 to 60 parts by weight of at least one further mono-, di- or triacrylate or mono-, di- or trimethacrylate,
the parts by weight of components I) to IV) adding up to 100 parts by weight,
and further to these 100 parts by weight at least comprising
V) 0.1 to 10 parts by weight of at least one photoinitiator.

14. Use of a varnish composition comprising
I) 12 to 70 parts by weight of at least one C₂-C₁₂ diol diacrylate or C₂-C₁₂ diol dimethacrylate, in which C₂-C₁₂ stands for a linear alkylene radical which may optionally be substituted by a methyl group or may be interrupted by one or more oxygen atoms and optionally substituted by one or more methyl groups,
II) 12 to 40 parts by weight of at least one alkoxylated, preferably ethoxylated mono-, di-, tri-, tetra-, penta- or hexaacrylate or alkoxylated, preferably ethoxylated mono-, di-, tri-, tetra-, penta- or hexamethacrylate,
III) 0 to 40 parts by weight of at least one monomer selected from the group encompassing pentaerythritol triacrylate, pentaerythritol tetraacrylate, dipentaerythritol tetraacrylate, dipentaerythritol pentaacrylate, dipentaerythritol hexaacrylate, pentaerythritol trimethacrylate, pentaerythritol tetramethacrylate, dipentaerythritol tetramethacrylate, dipentaerythritol pentamethacrylate, dipentaerythritol hexamethacrylate and reaction products thereof with aliphatic or aromatic diisocyanates,
IV) 5 to 60 parts by weight of at least one further mono-, di- or triacrylate or mono-, di- or trimethacrylate,
the parts by weight of components I) to IV) adding up to 100 parts by weight,
and further to these 100 parts by weight at least comprising
V) 0.1 to 10 parts by weight of at least one photoinitiator,
for producing at least one scratch-resistant coating on a document of security and/or value.

## Revendications

1. Document de sécurité et/ou de valeur, contenant au moins un revêtement résistant aux rayures, **caractérisé en ce que** le revêtement résistant aux rayures a été préparé à partir d'une composition de laque contenant
I) 12 à 70 parties en poids d'au moins un diacrylate de C₂-C₁₂-diol ou d'un diméthacrylate de C₂-C₁₂-diol, C₂-C₁₂ représentant un radical alkylène linéaire, qui peut le cas échéant être substitué par un groupe méthyle ou être interrompu par un ou plusieurs atomes d'oxygène et éventuellement être substitué par un ou plusieurs groupes méthyle,
II) 12 à 40 parties en poids d'au moins un monoacrylate, diacrylate, triacrylate, tétraacrylate, pentaacrylate ou hexaacrylate alcoxylé, de préférence éthoxylé ou d'au moins un monométhacrylate, diméthacrylate, triméthacrylate, tétraméthacrylate, pentaméthacrylate ou hexaméthacrylate alcoxylé, de préférence éthoxylé,
III) 0 à 40 parties en poids d'au moins un monomère choisi dans le groupe comprenant le triacrylate de pentaérythritol, le tétraacrylate de pentaérythritol, le tétraacrylate de dipentaérythritol, le pentaacrylate de dipentaérythritol, l'hexaacrylate de dipentaérythritol, le triméthacrylate de dipentaérythritol, le tétraméthacrylate de pentaérythritol, le tétraméthacrylate de dipentaérythritol, le pentaméthacrylate de dipentaérythritol, l'hexaméthacrylate de dipentaérythritol et leurs produits de réaction avec des diisocyanates aliphatiques ou aromatiques,
IV) 5 à 60 parties en poids d'au moins un autre monoacrylate, diacrylate ou triacrylate ou monométhacrylate, diméthacrylate ou triméthacrylate,
les parties en poids des composants I) à IV) s'ajoutant à 100 parties en poids et contenant en plus de ces 100 parties en poids au moins
V) 0,1 à 10 parties en poids d'au moins un photo-initiateur.

2. Document de sécurité et/ou de valeur selon la revendication 1, **caractérisé en ce que** la composition de laque contient 15 à 60 parties en poids, de préférence 20 à 55 parties en poids de composant I).

3. Document de sécurité et/ou de valeur selon la revendication 1 ou 2, **caractérisé en ce que** la composition de laque contient 12 à 35 parties en poids, de préférence 15 à 30 parties en poids de composant II).

4. Document de sécurité et/ou de valeur selon au moins l'une quelconque des revendications 1 à 3, **caractérisé en ce que** la composition de laque contient 0 à 30 parties en poids, de préférence 0,1 à 30 parties en poids de composant III).

5. Document de sécurité et/ou de valeur selon au moins l'une quelconque des revendications 1 à 4, **caractérisé en ce qu'**il s'agit d'un document d'identification.

6. Document de sécurité et/ou de valeur selon au moins l'une quelconque des revendications 1 à 5, **caractérisé en ce qu'**il présente, sur les deux faces, au moins un revêtement résistant aux rayures préparé à partir de la composition de laque.

7. Document de sécurité et/ou de valeur selon au moins l'une quelconque des revendications 1 à 6, **caractérisé en ce qu'**une information est gravée dans au moins un des revêtements résistant aux rayures.

8. Document de sécurité et/ou de valeur selon au moins l'une quelconque des revendications 1 à 7, dans lequel une pile de feuilles contenant plusieurs feuilles en matériau synthétique thermoplastique est formée et ensuite laminée et la pile de feuilles contient, pour la réalisation d'au moins une couche extérieure apprêtée de manière résistante aux rayures du document de sécurité et/ou de valeur, au moins une feuille en matériau synthétique thermoplastique présentant une face orientée vers l'extérieur, revêtue de manière résistante aux rayures.

9. Document de sécurité et/ou de valeur selon la revendication 8, **caractérisé en ce que** la pile de feuilles contient, pour la réalisation de deux couches extérieures apprêtées de manière résistante aux rayures du document de sécurité et/ou de valeur, au moins deux feuilles en matériau synthétique thermoplastique présentant à chaque fois une face revêtue de manière résistante aux rayures orientée vers l'extérieur.

10. Document de sécurité et/ou de valeur selon la revendication 8 ou 9, **caractérisé en ce qu'**au moins une information est gravée dans au moins une couche extérieure apprêtée de manière résistante aux rayures pendant ou après le laminage de la pile de feuilles.

11. Document de sécurité et/ou de valeur selon au moins l'une quelconque des revendications 8 à 10, **caractérisé en ce qu'**il s'agit, pour la feuille en matériau synthétique thermoplastique revêtue de manière résistante aux rayures, d'une feuille contenant au moins un polycarbonate ou un copolycarbonate.

12. Feuille en matériau synthétique thermoplastique, **caractérisée en ce qu'**elle présente au moins un revêtement préparé à partir d'une composition de laque contenant
I) 12 à 70 parties en poids d'au moins un diacrylate de C₂-C₁₂-diol ou d'un diméthacrylate de C₂-C₁₂-diol, C₂-C₁₂ représentant un radical alkylène linéaire, qui peut le cas échéant être substitué par un groupe méthyle ou être interrompu par un ou plusieurs atomes d'oxygène et éventuellement être substitué par un ou plusieurs groupes méthyle,
II) 12 à 40 parties en poids d'au moins un monoacrylate, diacrylate, triacrylate, tétraacrylate, pentaacrylate ou hexaacrylate alcoxylé, de préférence éthoxylé ou d'au moins un monométhacrylate, diméthacrylate, triméthacrylate, tétraméthacrylate, pentaméthacrylate ou hexaméthacrylate alcoxylé, de préférence éthoxylé,
III) 0 à 40 parties en poids d'au moins un monomère choisi dans le groupe comprenant le triacrylate de pentaérythritol, le tétraacrylate de pentaérythritol, le tétraacrylate de dipentaérythritol, le pentaacrylate de dipentaérythritol, l'hexaacrylate de dipentaérythritol, le triméthacrylate dipentaérythritol, le tétraméthacrylate de pentaérythritol, le tétraméthacrylate de dipentaérythritol, le pentaméthacrylate de dipentaérythritol, l'hexaméthacrylate de dipentaérythritol et leurs produits de réaction avec des diisocyanates aliphatiques ou aromatiques,
IV) 5 à 60 parties en poids d'au moins un autre monoacrylate, diacrylate ou triacrylate ou monométhacrylate, diméthacrylate ou triméthacrylate,
les parties en poids des composants I) à IV) s'ajoutant à 100 parties en poids et contenant en plus de ces 100 parties en poids au moins
V) 0,1 à 10 parties en poids d'au moins un photo-initiateur.

13. Composition de laque contenant
I) 12 à 70 parties en poids d'au moins un diacrylate de C₂-C₁₂-diol ou d'un diméthacrylate de C₂-C₁₂-diol, C₂-C₁₂ représentant un radical alkylène linéaire, qui peut le cas échéant être substitué par un groupe méthyle ou être interrompu par un ou plusieurs atomes d'oxygène et éventuellement être substitué par un ou plusieurs groupes méthyle,
II) 12 à 40 parties en poids d'au moins un monoacrylate, diacrylate, triacrylate, tétraacrylate, pentaacrylate ou hexaacrylate alcoxylé, de préférence éthoxylé ou d'au moins un monométhacrylate, diméthacrylate, triméthacrylate, tétraméthacrylate, pentaméthacrylate ou hexaméthacrylate alcoxylé, de préférence éthoxylé,
III) 0 à 40 parties en poids d'au moins un monomère choisi dans le groupe comprenant le triacrylate de pentaérythritol, le tétraacrylate de pentaérythritol, le tétraacrylate de dipentaérythritol, le pentaacrylate de dipentaérythritol, l'hexaacrylate de dipentaérythritol, le triméthacrylate dipentaérythritol, le tétraméthacrylate de pentaérythritol, le tétraméthacrylate de dipentaérythritol, le pentaméthacrylate de dipentaérythritol, l'hexaméthacrylate de dipentaérythritol et leurs produits de réaction avec des diisocyanates aliphatiques ou aromatiques,
IV) 5 à 60 parties en poids d'au moins un autre monoacrylate, diacrylate ou triacrylate ou monométhacrylate, diméthacrylate ou triméthacrylate,
les parties en poids des composants I) à IV) s'ajoutant à 100 parties en poids et contenant en plus de ces 100 parties en poids au moins
V) 0,1 à 10 parties en poids d'au moins un photo-initiateur.

14. Utilisation d'une composition de laque contenant
I) 12 à 70 parties en poids d'au moins un diacrylate de C₂-C₁₂-diol ou d'un diméthacrylate de C₂-C₁₂-diol, C₂-C₁₂ représentant un radical alkylène linéaire, qui peut le cas échéant être substitué par un groupe méthyle ou être interrompu par un ou plusieurs atomes d'oxygène et éventuellement être substitué par un ou plusieurs groupes méthyle,
II) 12 à 40 parties en poids d'au moins un monoacrylate, diacrylate, triacrylate, tétraacrylate, pentaacrylate ou hexaacrylate alcoxylé, de préférence éthoxylé ou d'au moins un monométhacrylate, diméthacrylate, triméthacrylate, tétraméthacrylate, pentaméthacrylate ou hexaméthacrylate alcoxylé, de préférence éthoxylé,
III) 0 à 40 parties en poids d'au moins un monomère choisi dans le groupe comprenant le triacrylate de pentaérythritol, le tétraacrylate de pentaérythritol, le tétraacrylate de dipentaérythritol, le pentaacrylate de dipentaérythritol, l'hexaacrylate de dipentaérythritol, le triméthacrylate de dipentaérythritol, le tétraméthacrylate de pentaérythritol, le tétraméthacrylate de dipentaérythritol, le pentaméthacrylate de dipentaérythritol, l'hexaméthacrylate de dipentaérythritol et leurs produits de réaction avec des diisocyanates aliphatiques ou aromatiques,
IV) 5 à 60 parties en poids d'au moins un autre monoacrylate, diacrylate ou triacrylate ou monométhacrylate, diméthacrylate ou triméthacrylate,
les parties en poids des composants I) à IV) s'ajoutant à 100 parties en poids et contenant en plus de ces 100 parties en poids au moins
V) 0,1 à 10 parties en poids d'au moins un photo-initiateur,
pour la réalisation d'au moins un revêtement résistant aux rayures d'un document de sécurité et/ou de valeur.
